# EUROPEAN PATENT APPLICATION

(11) **EP 4 750 016 A1**
(43) Date of publication of application: **27.05.2026**
(21) Application number: 25205064.6
(22) Date of filing: 26.09.2025
(51) Int. Cl.: H04L 41/12, H04L 41/22, H04L 41/0631, H04L 41/0654, H04L 41/0816, H04L 41/122

(54) **APPLICATION TOPOLOGY CHANGE AND INFRASTRUCTURE ALARM ANALYSIS**

(30) Priority: 25.11.2024 US 202418958996
(71) Applicant: Juniper Networks, Inc., Sunnyvale, CA 94089 (US)
(72) Inventor: LOBO, Lawrence Croiden, Sunnyvale, 94089 (US); GUPTA, Rahul, Sunnyvale, 94089 (US); MARIAPPAN, Yuvaraja, Sunnyvale, 94089 (US); BANKA, Tarun, Sunnyvale, 94089 (US); SRIDHAR, Thayumanavan, Sunnyvale, 94089 (US); NESTEROFF, Lyubov, Sunnyvale, 94089 (US); NISHANTH, K P, Sunnyvale, 94089 (US); YAVATKAR, Raj, Sunnyvale, 94089 (US)
(74) Representative: D Young & Co LLP

(57) **Abstract**

In general, techniques are described for a computing system that generates a first graph representative of a of a first application topology of a distributed application at a first time that includes a first plurality of nodes of a computing infrastructure across a plurality of layers. The computing system generates a second graph representative of a second application topology of the distributed application at a second time. The computing system determines, based on a comparison of the first graph and the second graph, that a path has changed. Based on the determination that the path has changed, the computing system outputs an indication that an alarm indicative of an issue in the computing infrastructure is caused by the change to the path.

## Description

### TECHNICAL FIELD

The disclosure relates to computing systems and, more specifically, to managing distributed applications operating over a network.

### BACKGROUND

Computer networks have become ubiquitous and the number of network applications, network-connected devices, and types of network-connected devices are rapidly expanding. Such devices now include computers, smart phones, Internet-of-Things (IoT) devices, cars, medical devices factory equipment, etc. An end-user network-connected device typically cannot directly access a public network such as the Internet. Instead, an end-user network device establishes a network connection with an access network, and the access network communicates with a core network that is connected to one or more packet data networks (PDNs) offering services. There are several different types of access networks currently in use. Examples include Radio Access Networks (RANs) that are access networks for 3rd Generation Partnership Project (3GPP) networks, trusted and untrusted non-3GPP networks such as Wi-Fi or WiMAX networks, and fixed/wireline networks such as Digital Subscriber Line (DSL), Passive Optical Network (PON), and cable networks. The core network may be that of a mobile service provider network, such as a 3G, 4G/LTE, or 5G network.

In a typical cloud data center environment, there is a large collection of interconnected servers that provide computing and/or storage capacity to run various applications. For example, a data center may comprise a facility that hosts applications and services for subscribers, i.e., customers of data center. The data center may, for example, host all of the infrastructure equipment, such as networking and storage systems, redundant power supplies, and environmental controls. In a typical data center, clusters of storage systems and application servers are interconnected via high-speed switch fabric provided by one or more tiers of physical network switches and routers. More sophisticated data centers provide infrastructure spread throughout the world with subscriber support equipment located in various physical hosting facilities.

Virtualized data centers are becoming a core foundation of the modern information technology (IT) infrastructure. In particular, modern data centers have extensively utilized virtualized environments in which virtual hosts, also referred to herein as virtual execution elements or workloads, such virtual machines or containers, are deployed and executed on an underlying compute platform of physical computing devices. Workloads may also include bare metal processes.

Virtualization within a data center can provide several advantages. One advantage is that virtualization can provide significant improvements to efficiency. As the underlying physical computing devices (i.e., servers) have become increasingly powerful with the advent of multicore microprocessor architectures with a large number of cores per physical central processing unit (CPU), virtualization becomes easier and more efficient. A second advantage is that virtualization provides significant control over the computing infrastructure. As physical computing resources become fungible resources, such as in a cloud-based computing environment, provisioning and management of the computing infrastructure becomes easier. Thus, enterprise information technology (IT) staff often prefer virtualized compute clusters in data centers for their management advantages in addition to the efficiency and increased return on investment (ROI) that virtualization provides.

Containerization is a virtualization scheme based on operation system-level virtualization. Containers are light-weight and portable workloads for applications that are isolated from one another and from the host. Because containers are not tightly coupled to the host hardware computing environment, an application can be tied to a container image and executed as a single light-weight package on any host or virtual host that supports the underlying container architecture. As such, containers address the problem of how to make software work in different computing environments. Containers offer the promise of running consistently from one computing environment to another, virtual or physical.

With containers' inherently lightweight nature, a single host can often support many more container instances than traditional virtual machines (VMs). These systems are typically dynamic and ephemeral, as hosted services can be quickly scaled up or adapted to new requirements. Often short-lived, containers can be created and moved more efficiently than VMs, and they can also be managed as groups of logically-related elements (sometimes referred to as "pods" for some orchestration platforms, e.g., Kubernetes). These container characteristics impact the requirements for container networking solutions: the network should be agile and scalable. VMs, containers, and bare metal servers may need to coexist in the same computing environment, with communication enabled among the diverse deployments of applications. The container network should also be agnostic to work with the multiple types of orchestration platforms that are used to deploy containerized applications.

A computing infrastructure that manages deployment and infrastructure for application execution may involve two main roles: (1) orchestration-for automating deployment, scaling, and operations of applications across clusters of hosts and providing computing infrastructure, which may include container-centric computing infrastructure; and (2) network management-for creating virtual networks in the network infrastructure to enable packetized communication among applications running on virtual computing instances, such as containers or VMs, as well as among applications running on legacy (e.g., physical) environments. Software-defined networking contributes to network management.

### SUMMARY

Particular embodiments are set out in the independent claims. Various optional examples are set out in the dependent claims. In general, techniques are described for managing a distributed application based on changes to graphs for an application topology of the distributed application. A computing infrastructure to support distributed applications includes multiple layers each having different elements corresponding to the layer. Example layers and elements may include an application services layer having application services or external clients, a virtual compute instances ("instances") layer having, e.g., Pods and/or Virtual Machines, a compute layer having compute nodes / real servers, a network layer having switches, etc. Nodes representing the elements of the different layers may be arranged into an application topology graph with edges connecting pairs of elements to represent relationships among the elements. For example, a node representing a virtual compute instance may be connected via an edge with a node representing a compute node where the virtual compute instance executes on the compute node, or an edge may represent an exchange of a packet flow between two nodes. Nodes and edges of the application topology graph may be augmented with additional information representing states of the elements, for instance based on telemetry information generated by the elements. The augmented application topology graph is referred to as a "knowledge graph" for the application topology of the distributed application.

Application services of a distributed application communicate with each other and have dependencies on one another across the layers of the computing infrastructure via paths through the various elements of the different layers (hereinafter, the terms "elements" and "nodes" can be used interchangeably). In some cases, changes to application topology that result in new paths may cause issues for the nodes. For example, the removal of a first node from the application topology may result in additional network paths being routed to a second node, which may overwhelm the second node.

In an example of the disclosed techniques, an analysis system processes telemetry data obtained from nodes of a distributed application and, in some cases, other data such as configuration data and/or network data. The analysis system may process the data to identify paths through the nodes (e.g., paths between services of the distributed application). Nodes along a path may exhibit degraded performance, such as increased latency, reduced transmission speed, reduced data throughput, dropped packets, and other impacts to the performance and functionality of the path. Such impacts may, in some instances, result from changes to the application topology that caused a modification to the path. If the analysis system determines that a change to a path in the application topology graph is associated with an alarm, the analysis system may generate a user interface that includes an indication that the alarm was the result of a path change. In some examples, the analysis system may reconfigure the network or direct a scheduler, such as a Kubernetes scheduler, to modify the deployment of services for the distributed application based on the determination that the change to the path is associated with an alarm.

The techniques of this disclosure may provide one or more technical advantages that can realize one or more practical applications. In an example, the analysis system enables an administrator to determine that an alarm is the result of a path change in a topology of a distributed application. In addition, the analysis system enables the administrator to revert the topology of the distributed application to a previous configuration of the topology and thereby undo the path change that resulted in the alarm. By enabling an administrator to determine that an alarm is the result of a path change, the analysis system may facilitate more efficient diagnosis and remediation of issues within the topology of the distributed application. In some examples, the remedial actions are performed by an orchestrator (e.g., a scheduler), a network controller, and/or an element management system, for instance, automatically based on the determination by the analysis system that an alarm is a result of a path change.

In another example, this disclosure describes a computing system comprising memory; and processing circuitry in communication with the memory, and configured to generate a first graph representative of a first application topology of a distributed application at a first time, wherein the first application topology includes a first plurality of nodes of a computing infrastructure distributed across a plurality of layers; generate a second graph representative of a second application topology of the distributed application at a second time, wherein the second application topology includes a second plurality of nodes of the computing infrastructure distributed across the plurality of layers; determine, based on a comparison of the first graph and the second graph, that a path has changed; and based on the determination that the path has changed, output an indication that an alarm indicative of an issue in the computing infrastructure is caused by the change to the path.

In one example, this disclosure describes a method comprising generating, by a computing system, a first graph representative of a first application topology of a distributed application at a first time, wherein the first application topology includes a first plurality of nodes of a computing infrastructure distributed across a plurality of layers; generating, by the computing system, a second graph representative of a second application topology of the distributed application at a second time, wherein the second application topology includes a second plurality of nodes of the computing infrastructure distributed across the plurality of layers; determining, by the computing system and based on a comparison of the first graph and the second graph, that a path has changed; and based on the determination that the path has changed, outputting, by the computing system, an indication that an alarm indicative of an issue in the computing infrastructure is caused by the change to the path.

In another example, this disclosure describes non-transitory computer-readable storage media comprising instructions that, when executed, cause one or more processors to generate a first graph representative of a first application topology of a distributed application at a first time, wherein the first application topology includes a first plurality of nodes of a computing infrastructure distributed across a plurality of layers; generate a second graph representative of a second application topology of the distributed application at a second time, wherein the second application topology includes a second plurality of nodes of the computing infrastructure distributed across the plurality of layers; determine, based on a comparison of the first graph and the second graph, that a path has changed; and based on the determination that the path has changed, output an indication that an alarm indicative of an issue in the computing infrastructure is caused by the change to the path.

The details of one or more embodiments of this disclosure are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example computing infrastructure and analysis system, in accordance with the techniques described in this disclosure.
FIG. 2 is a block diagram illustrating an example analysis system, in accordance with techniques described in this disclosure.
FIG. 3 is a block diagram illustrating an example graph of a distributed application, in accordance with one or more techniques of this disclosure.
FIGS. 4A-4F are example user interfaces, in accordance with one or more techniques of this disclosure.
FIG. 5 is a flow diagram illustrating an example operation of a computing system, in accordance with one or more techniques of this disclosure.

Like reference characters denote like elements throughout the description and figures.

### DETAILED DESCRIPTION

Site Reliability Engineers (SREs) face challenges in tracking and understanding the evolution of application topologies over time. This problem stems from the complexity of modern applications, which often have intricate and dynamic architectures. As applications evolve, keeping track of changes, identifying new alarms, resolving existing alarms, and understanding modifications in the application topology and path changes become increasingly challenging tasks. SREs have faced ongoing challenges in tracking alterations within complex application architectures and assessing their implications on system performance in a timely manner. The lack of real-time insights into the criticality of path changes has further compounded the problem, leaving SREs with limited guidance in prioritizing response efforts.

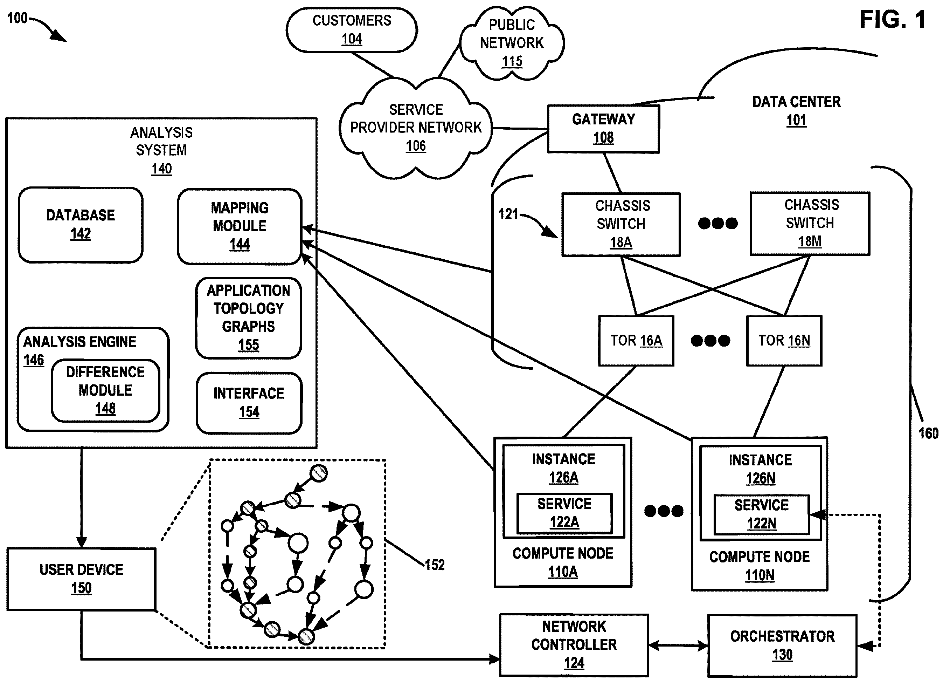

FIG. 1 is a block diagram illustrating an example computing infrastructure 100 and analysis system 140, in accordance with the techniques described in this disclosure. In general, data center 101 provides an operating environment for applications and services for customer sites 104 (illustrated as "customers 104") having one or more customer networks coupled to the data center by service provider network 106. Data center 101 may, for example, host infrastructure equipment, such as networking and storage systems, redundant power supplies, and environmental controls. Service provider network 106 is coupled to public network 115, which may represent one or more networks administered by other providers, and may thus form part of a large-scale public network infrastructure, e.g., the Internet. Public network 115 may represent, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates service provider network 106, an enterprise IP network, or some combination thereof.

Although customer sites 104 and public network 115 are illustrated and described primarily as edge networks of service provider network 106, in some examples, one or more of customer sites 104 and public network 115 may be tenant networks within data center 10 or another data center. For example, data center 101 may host multiple tenants (customers) each associated with one or more virtual private networks (VPNs), each of which may implement one of customer sites 104.

Service provider network 106 offers packet-based connectivity to attached customer sites 104, data center 101, and public network 115. Service provider network 106 may represent a network that is owned and operated by a service provider to interconnect a plurality of networks. Service provider network 106 may implement Multi-Protocol Label Switching (MPLS) forwarding and in such instances may be referred to as an MPLS network or MPLS backbone. In some instances, service provider network 106 represents a plurality of interconnected autonomous systems, such as the Internet, that offers services from one or more service providers.

In some examples, data center 101 may represent one of many geographically distributed data centers in which the techniques and systems described herein may be implemented. As illustrated in the example of FIG. 1, data center 101 may be a facility that provides network services, cloud services, storage services, and/or application services for customers. Data center 101 may represent an on-premises data center, a private cloud, a public cloud, a hybrid cloud, or other type of deployment. A customer of the service provider may be a collective entity, such as enterprises and governments or individuals. For example, a data center may host web services for several enterprises and end users. Other example services may include data storage, virtual private networks, traffic engineering, file service, data mining, scientific- or super- computing, and so on. Although illustrated as a separate edge network of service provider network 106, elements of data center 101, such as one or more physical network functions (PNFs) or virtualized network functions (VNFs) may be included within the service provider network 106 core.

Switch fabric 121 may include interconnected top-of-rack (TOR) (or other "leaf") switches 16A-16N (hereinafter "TOR switches 16) coupled to a distribution layer of chassis (or "spine" or "core") switches 18A-18N (hereinafter "chassis switches 18"). Although not shown, data center 101 may also include, for example, one or more non-edge switches, routers, hubs, gateways, security devices, such as firewalls, intrusion detection, and/or intrusion prevention devices, servers, computer terminals, laptops, printers, databases, wireless mobile devices, such as cellular phones or personal digital assistants, wireless access points, bridges, cable modems, application accelerators, or other network devices. Data center 101 may also include one or more physical network functions (PNFs), such as physical firewalls, load balancers, routers, route reflectors, broadband network gateways (BNGs), Evolved Packet Cores or other cellular network elements, and other PNFs.

The term "packet flow," "traffic flow," or simply "flow" refers to a set of packets originating from a particular source device or endpoint and sent to a particular destination device or endpoint. A single flow of packets may be identified by the 5-tuple: <source network address, destination network address, source port, destination port, protocol>, for example. This 5-tuple generally identifies a packet flow to which a received packet corresponds. An n-tuple refers to any n items drawn from the 5-tuple. For example, a 2-tuple for a packet may refer to the combination of <source network address, destination network address> or <source network address, source port> for the packet.

Any server of data center 101 may be configured with workloads by virtualizing resources of the server to provide an isolation among one or more processes (applications) executing on the server. "Hypervisor-based" or "hardware-level" or "platform" virtualization refers to the creation of virtual machines that each includes a guest operating system for executing one or more processes. In general, a virtual machine provides a virtualized/guest operating system for executing applications in an isolated virtual environment. Because a virtual machine is virtualized from physical hardware of the host server, executing applications are isolated from both the hardware of the host and other virtual machines. Each virtual machine may be configured with one or more virtual network interfaces for communicating on corresponding virtual networks.

"Container-based" or "operating system" virtualization refers to the virtualization of an operating system to run multiple isolated systems on a single machine (virtual or physical). Such isolated systems represent containers, such as those provided by the open-source DOCKER Container application or by CoreOS Rkt ("Rocket"). Like a virtual machine, each container is virtualized and may remain isolated from the host machine and other containers. However, unlike a virtual machine, each container may omit an individual operating system and provide only an application suite and application-specific libraries. In general, a container is executed by the host machine as an isolated user-space instance and may share an operating system and common libraries with other containers executing on the host machine. Thus, containers may require less processing power, storage, and network resources than virtual machines. A group of one or more containers may be configured to share one or more virtual network interfaces for communicating on corresponding virtual networks.

In some examples, containers are managed by their host kernel to allow limitation and prioritization of resources (CPU, memory, block I/O, network, etc.) without the need for starting any virtual machines, in some cases using namespace isolation functionality that allows complete isolation of an application's (e.g., a given container) view of the operating environment, including process trees, networking, user identifiers and mounted file systems. In some examples, containers may be deployed according to Linux Containers (LXC), an operating-system-level virtualization method for running multiple isolated Linux systems (containers) on a control host using a single Linux kernel. LXC is an operating-system-level virtualization method for running multiple isolated Linux systems (containers) on a single control host (LXC host). An LXC does not use a virtual machine (although an LXC may be hosted by a virtual machine). Instead, an LXC uses a virtual environment with its own CPU, memory, block I/O, network, and/or other resource space. The LXC resource control mechanism is provided by *namespaces* and *cgroups* in the Linux kernel on the LXC host. Additional examples of containerization methods include OpenVZ, FreeBSD jail, AIX Workload partitions, and Solaris containers. Accordingly, as used herein, the term "containers" may encompass not only LXC-style containers but also any one or more of virtualization engines, virtual private servers, silos, or jails.

In the example of FIG. 1, data center 101 includes storage and/or compute servers interconnected by one or more tiers of physical network switches and routers, with compute nodes 110A-110N (herein, "compute nodes 110") depicted as interconnected via TOR switches 16 and chassis switches 18. Compute nodes 110 may be bare metal machines and/or virtual machines within data center 101 and may also be referred to herein as "hosts" or "host devices." Compute nodes 110 may represent a computing device, such as an x86 processor-based server, configured to operate according to techniques described herein.

Compute nodes 110 may host virtual network endpoints for one or more virtual networks that operate over the physical network provided by TOR switches 16 and chassis switches 18. Although described primarily with respect to a data center-based switching network, other physical networks, such as service provider network 7, may underlay the one or more virtual networks.

Each of compute nodes 110 may host one or more of virtual compute instances 126A-126N (collectively "virtual compute instances 126", alternatively referred to more simply as "instances 126" or as "workloads"). The term "workload" encompasses virtual machines, containers, Kubernetes Pods, and/or other virtualized compute instances that provide an at least partially independent execution environment for applications and may be referred to as "instance" throughout. As shown in FIG. 1, compute node 110A hosts instance 126 that implements service 122A. However, a compute node 110 may execute as many instances or workloads as is practical given hardware resource limitations of the compute node 110.

Computing infrastructure 100 may implement an automation platform for automating deployment, scaling, and operations of workloads across compute nodes 110 to provide virtualized infrastructure for executing application workloads and services. In some examples, the platform may be a container orchestration platform that provides a container-centric infrastructure for automating deployment, scaling, and operations of containers to provide a container-centric infrastructure. "Orchestration," in the context of a virtualized computing infrastructure generally refers to provisioning, scheduling, and managing workloads and/or applications and services executing on such workloads to the host servers available to the orchestration platform. Container orchestration, specifically, permits container coordination and refers to the deployment, management, scaling, and configuration, e.g., of containers to host servers by a container orchestration platform. Example instances of orchestration platforms include Kubernetes, Docker swarm, Mesos/Marathon, OpenShift, OpenStack, VMware, and Amazon ECS.

Elements of the automation platform of computing infrastructure 100 include at least compute nodes 110, orchestrator 130, telemetry collector 142, analysis system 140, and UI device 129. The term "elements" or "nodes" may be used throughout to refer to the various software and hardware elements of computing infrastructure 100. In the example of FIG. 1, nodes 160 include services 122A-122N, workloads (e.g., instances 126), compute nodes 110, TOR switches 16, chassis switches 18, and/or other element of computing infrastructure 100. (The term "nodes" is also used to refer to nodes of an application topology graph, where such nodes correspond to nodes of computing infrastructure 100.)

Each of nodes 160 belong to one of various layers for distributed applications executing on compute infrastructure 100. Layers can include, e.g., a services layer including services 122A-122N, an instances layer including instances 126A-126N, a compute layer including compute nodes 110A-110N, and a network layer including switches 16, 18.

Orchestrator 130 implements a scheduler for the computing infrastructure 100. Orchestrator 130 may be a distributed or centralized application that executes on one or more computing devices of a computing system. Orchestrator 130 may implement respective master nodes for one or more clusters each having one or more minion nodes implemented by one or more servers of computing infrastructure 100.

In general, orchestrator 130 controls the deployment, scaling, and operations of workloads across clusters of servers and providing computing infrastructure, which may include container-centric computing infrastructure. Orchestrator 130 may implement respective cluster masters for one or more Kubernetes clusters. As an example, Kubernetes is a container management platform that provides portability across public and private clouds, each of which may provide virtualization infrastructure to the container management platform. Orchestrator 130 may represent any of the above-listed orchestration platforms, e.g., Kubernetes.

Each of services 122A-122N (collectively, "services 122") is deployed using instances 126. Services 122 may each represent or include one or more applications services (e.g., microservices, application sub-components, etc.) executed by an instance deployed by a container orchestration system. One or more of services 122 may collectively implement a distributed application that includes a collection of one or more services 122. For example, a distributed application may include services 122A-122N. Each of services 122 may provide or implement one or more services, and where instances 126 represent Pods or other container deployments, the one or more services are containerized services or "microservices". Compute nodes 110 may host services for multiple different distributed applications. In some examples, services of a distributed application are distributed across compute nodes managed by any combination of service providers, enterprises, or other entities. Such compute nodes may be located in multiple different data centers, on-prem, or in private, public, or hybrid clouds.

Orchestrator 130 includes a scheduler to schedule services 122 to compute nodes 110. In general, orchestrator 130 may manage the placement of each of services 122 to compute nodes 110 according to scheduling policies, the amount of resources requested for the service, and available resources of compute nodes 110. Orchestrator 130 may consider compute node resources when assigning services 122 to compute nodes 110, such as CPU-related resources (e.g., cores, CPU/core utilization), memory-related resources (available main memory, e.g., 2 GB), ephemeral storage, and user-defined extended resources. In Kubernetes, the scheduler is known as kube-scheduler.

Services 122 may have distinct performance requirements that need to be met within a highly dynamic application execution environment. In such an environment, application performance is the artifact of dynamics of different resources, such as worker node resources; network resources (e.g., bandwidth, latency, loss, jitter, firewall policies), network policies, and the communication graph among different services of a distributed application; as well as the performance of external services, such as authentication and external cloud services.

Services 122 may communicate with each other as part of providing functionality for a distributed application. Each service of service 122 may provide functionality for one or more components of a distributed application. In an example, service 122A provides functionality for one part of the distributed application, while service 122N provides other functionality for a different part of the distributed application. Service 122A communicates with service 122N to provide the functionality and to enable service 122N to provide the other functionality.

Services 122 may communicate with each other using calls, such as remote procedure calls (RPCs). Services 122 may communicate with each other along a chain of RPCs to provide the functionality of the distributed application. For example, service 122A may communicate with service 122N and send RPCs to service 122N as part of providing functionality of the distributed application.

The application topology for a distributed application includes nodes 160, which include services 122 and components of computing infrastructure 100 that underpin services 122 and facilitate the execution of services 100. Nodes 160 may be any components and devices of data center 101, such as services 122, instances 126, compute nodes 110, TOR switches 16, and chassis switches 18A. As part of providing the functionality of a distributed application, a node of nodes 160 may communicate with other nodes in the same layer (e.g., service 122A calling service 122N) and with nodes on other layers (e.g., nodes in layers above and/or below the layer of a given node in a hierarchy of a distributed application, compute node 110A communicating with TOR switch 16A, etc.). For example, as part of providing the functionality of a distributed application, service 122A may send traffic to service 122N. Such traffic traverses the various layers of the application topology and nodes therein, e.g., from service 122A via instance 126A via compute node 110A via nodes of the network layer via compute node 110N via instance 126N and finally to service 122N. These interactions are deeply nested, asynchronous, and invoke numerous other downstream operations.

Nodes 160 may change network paths because of changes to the topology of the distributed application that are the result of user intent changes, changes to hardware (e.g., removal of a network device from the topology), reconfiguration of one or more nodes, and/or other changes. For example, a network path between service 122A and service 122N may change due to reconfiguration of TOR switch 16A. Network controller 124 and/or orchestrator 130 may reconfigure the network paths when modifying the configuration of the distributed application. For example, in response to a user intent change, orchestrator 130 may reschedule service 122A to a different compute node of compute nodes 110 and thereby change one or more network paths between service 122A and other nodes of the distributed application.

As used herein, the term refers to a path through an application topology graph between two nodes. The two nodes may be, for instance, an application service node and a network node, which thereby traces the dependencies from the application service node to that network node. When an application topology changes, the path between any two nodes of the application topology graph may change with it. Changes to the application topology can cause performance issues in any layer of the application topology.

Computing infrastructure 100 includes analysis system 140, which may execute as an application on one or more devices of data center 101 or as a separate computing system. Analysis system 140 analyzes the performance of nodes 160 and a distributed application implemented by nodes 160. Analysis system 140 may consume network information, such as network telemetry obtained by a telemetry collector of analysis system 140, and network flow information obtained from chassis switches 18 and TOR switches 16. For example, analysis system 140 may obtain network information from one or more of nodes 160 and store the information in database 142. Analysis system 140 in some examples may consume information indicative of configurations of nodes 160, such as configuration data for switches 16, 18, compute nodes 110, or instances 126. This configuration information may be obtained by analysis system 140 from network controller 124, orchestrator 130, or from the nodes. The configuration information may indicate network adjacencies within switch fabric 121, routes configured on switches 16, 18, executing instances 126, indications of services 122 on compute nodes 110, and so forth. Analysis system 140 processes the network information, and in some cases the configuration information, to determine an application topology of a distributed application implemented by nodes 160.

Analysis system 140 includes database 142, which may be a database maintained by analysis system 140 and stored to storage media. Analysis system 140 may store data regarding network flows that represent, in some cases, RPC call flows between pairs of services 122. In addition, analysis system 140 may store one or more maps of service dependencies and network configurations in database 142. Database 142 may store sFlow or other flow records provided by switches 16, 18 and that indicate flows processed by each of the switches, for instance over a time period. Each flow record may include a switch identifier, source IP information, destination IP information, a number of packets, a number of bytes, action taken, or other flow description data. Database 142 may store other network information or configuration information of nodes of computing infrastructure 100.

In some examples, analysis system 140 may utilize application trace tools to determine call paths among services 122. For example, analysis system 140 may utilize an application tracing toolkit, such as OpenTelemetry and application tracing tool, such as Jaegar, to acquire tracing data of calls among services 122. The application tracing toolkit may use tools, such as APIs integrated into services 122 and services 122 instrumented or built using a software development kit (SDK) of the application tracing toolkit. The application tracing program may obtain data from the instrumented services of services 122. Analysis system 140 may use an application trace tool, such as Jaegar to analyze the trace data generated by the tracing toolkit and determine the call paths between services 122. Analysis system 140 may use trace data and call paths to determine paths among services 122. Analysis system 140 may store trace data and call paths to database 122.

A distributed application may consist of a large number of communicating services 122 that communicate along paths between nodes of nodes 160 that enable the functionality of the distributed application. Analysis system 140 may use the application trace tool to determine the network paths and store information regarding the paths in database 142.

Analysis system 140 may use information in database 122 and/or obtained from nodes 160 to determine nodes that are experiencing issues. Analysis system 140 may use information that includes service level agreements (SLAs) and service level expectations associated with nodes 160, performance data regarding nodes 160 (e.g., available bandwidth, available compute, throughput, etc.), and/or other information. Analysis system 140 may correlate information regarding the performance of nodes 160 to the SLAs/SLEs and/or other performance requirements to the current performance of nodes 160 to determine nodes that are experiencing issues. Based on determining that a given node is experiencing an issue, analysis system 140 may associate an alarm with that node. An alarm is thus indicative of an issue in the computing infrastructure. In some examples, analysis system 140 may receive an indication of an alarm from nodes 160 (e.g., a node performs self-diagnosis, a node determines that it is not meeting performance thresholds, etc.).

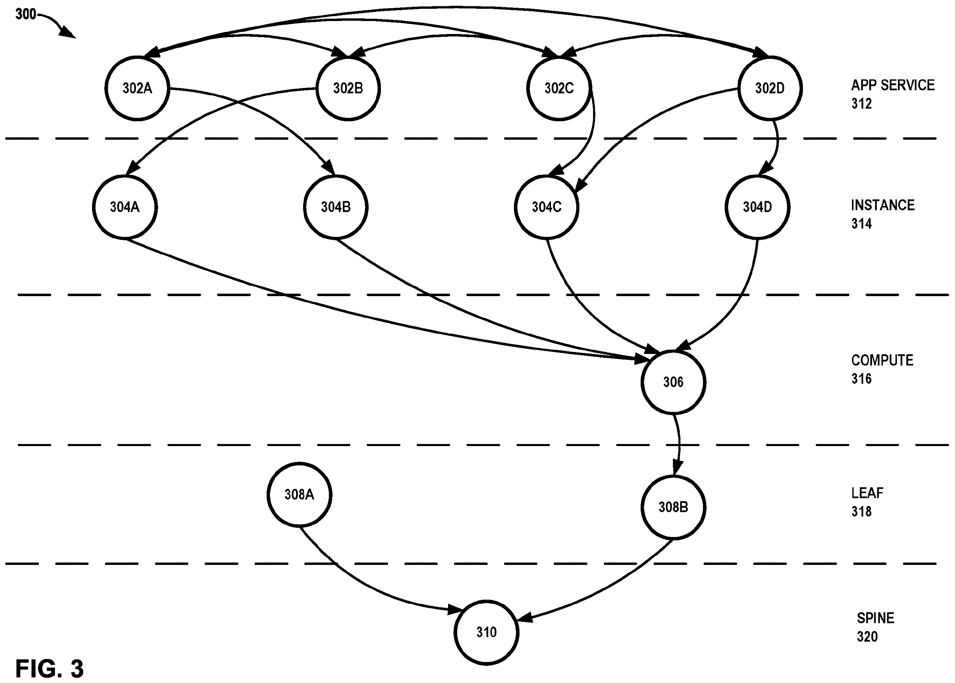

Analysis system 140 uses a module, such as mapping module 144, to generate application topology graphs included in application topology graphs 155 that represent application topologies for one or more distributed applications. The application topology graphs of application topology graphs 155 include nodes 160 from the various layers, with edges representing relationships between pairs of nodes. An edge relationship may be understood as a dependency. The edge relationship may be, for example, that a packet flow was exchanged between two nodes (e.g., from TOR switch 16A to chassis switch 18B, or from TOR switch 16A to compute node 110A, or vice-versa), that a service is being executed by an instance, that an instance is being hosted by a compute node, and so forth. An example application topology graph is depicted in FIG. 3.

Mapping module 144 may be a software component of analysis system 140 that generates graphs based on snapshots taken of the topology of distributed application and that indicates the state of nodes 160 (e.g., healthy, alarm, new alarm, etc.) For example, mapping module 144 may generate graphs based on snaps of the topology taken over periodic intervals (e.g., seconds, minutes, hours, etc.) that capture the state of the topology. In some examples, mapping module 144 may use third-party plugins to obtain additional insights and enhance application assurance to reduce mean time to repair (MTTR).

Analysis system 140 uses mapping module 144 and/or another component to generate the snapshots used to generate application topology graphs 155. Mapping module 144 may use the telemetry data obtained from nodes 160 and/or other data to generate snapshots on a periodic basis that reflect the distributed application topology within a corresponding window of time. In an example, mapping module 144 obtains telemetry data and/or other data over a first time period and generates a first snapshot of that time period. Mapping module 144 then obtains telemetry data and/or other data over a second, immediately succeeding time period and generates a second snapshot of that second time period. Mapping module 144 may store the snapshots in a key-value pair structure for efficient data access based on unique identifiers. An example is provided below:

```
 {
  nodes: {
    'deployment-1': {
      // node details
    },
    ...
  },
  edges: {
    'app-service-1-to-instance-1': {
      // edge details
    },
    ...
 } }
```

Mapping module 144 may enable a user, such as an administrator, to view snapshots of the distributed application topology via a user interface. Analysis system 140 generates user interfaces, such as UI 152, that include visual representations of the application topology graphs 155 and alarms via interface 154. Analysis system 140 provides information for displaying user interfaces to user device 150, which can display the user interfaces based on the information to a web browser, application screen, or other application.

Analysis system 140 may generate UI 152 as including visual representations of nodes 160, paths between nodes 160, and alarms associated with nodes 160 based on snapshots of the topology of the distributed application. In an example, analysis system 140 generates an application topology graphs 155 based on a snapshot of the topology of the distributed application. Analysis system 140 generates UI 152 based on the application topology graphs 155 as including a visual indication of an alarm associated with service 122A. Analysis system 140 may generate UI 152 for one or more types of topology layouts and enable a powerful and user-friendly tool for understanding, analyzing, and troubleshooting application topologies. Analysis system 140 may provide UI 152 to user device 150 via an application programming interface (API) of interface 154 user device 150 for output to a user.

Computing infrastructure 100 includes user device 150, which may be a computing device associated with a user and/or administrator of computing infrastructure 100. User device 150 may include one or more types of computing device, such as a desktop, laptop, tablet, thin client, smartphone, mixed reality glasses/goggles, and/or another type of computing device. User device 150 may include one or more display components that enable the outputting of UI 152 to a user. In an example, user device 150 receives data regarding UI 152 from analysis system 150 that includes an indication of an alarm associated with service 122A. User device 150 outputs UI 152 via a display component as including a visual indication of the alarm associated with service 122A to an administrator.

An administrator, such as a site reliability engineer (SRE), may find it challenging to determine why an alarm associated with a node of nodes 160 has occurred as modern application architectures are highly complex, comprising multiple layers, such as App Services, Instances, Compute, and Network Devices. SREs may struggle to identify and track changes in application topology over time. The lack of visibility into alterations within the infrastructure makes it difficult to assess their impact on system performance. For instance, nodes 160 may experience an alarm for a variety of reasons that include network congestion, hardware failure, and/or other reasons. The administrator may be unable to easily or efficiently determine that an alarm is the result of a change in the topology of the distributed application instead of another issue (e.g., hardware failure, misconfiguration of the node, etc.). Traditional change analysis tools often fail to provide real-time insights into the criticality of path changes. The inability to provide such insights hampers SREs' ability to prioritize response efforts effectively and proactively address potential network disruptions.

In accordance with the techniques of this disclosure, analysis system 140 identifies a path change and determines that an alarm was caused by the path change. Analysis system 140 may identify path changes by comparing different application topology graphs 155 that represents snapshots of the application topology of the distributed application at different times. In an example, analysis system 140 compares a first application topology graph representative of a current application topology of the distributed application to a second application topology graph representative of an immediately preceding application topology of the distributed application to determine that an alarm in the first application topology graph was not present in the second application topology graph. Based on the comparison, analysis system 140 determines that the alarm is the result of a path change because the alarm is present in the current application topology but not in the different, immediately preceding application topology.

Analysis system 140 uses difference module 148 of analysis engine 146 to compare application topology graphs, which may be a software component of analysis system 140, such as a plugin, process, executable, and/or other type of software component that compares application topology graphs. Difference module 148 may compare application topology graphs generated by mapping module 144 to identify differences between the application topology graphs. For example, difference module 148 may identify changes that include the removal/addition of nodes, changes in the configuration of nodes, changes in paths between the nodes, and alarms changes in the alarm state of nodes.

Difference module 148 identifies path changes that are changes in the paths between application topology graphs. Difference module 148 may identify path changes based on the comparison of application topology graphs. For example, difference module 148 may identify a path change that includes a change in a path between service 122A and another node in the topology, such as service 122N.

Analysis engine 146 determines that an alarm is caused by path changes based on the identification of path changes by difference module 148. Analysis engine 146 may compare information regarding alarms and changes to the distributed application topology determined by difference module 148 to determine that an alarm is caused by a path change. In an example, analysis engine 146 compares new alarms (e.g., alarms that are present in a current snapshot but not an immediately preceding snapshot) to changes in the application topology graphs to determine that one of the new alarms is associated with a change to a path. Analysis engine 146 may determine that an alarm is caused by a path change based on the alarm being associated with a node that has experienced one or more changes in paths to other nodes.

Analysis system 140 generates UI 152 as including a visual indication that an alarm associated with a node is caused by a path change. Analysis system 140 may generate UI 152 as including visually indicating the alarm is caused by a path change via one or more type of visual indications, such as color coding, animations, and/or textual indication. In an example, analysis system 140 generates UI 152 as including a textual indication that an alarm associated with service 122A is caused by a path change.

Analysis system 140 may generate UI 152 as including a timeline of snapshots generated by analysis system 140, where the timeline enables a user to select the graphs of one or more snapshots for display. In an example, analysis system 140 receives user input consistent with a selection of a first snapshot and a second snapshot. Analysis system 140 generates UI 152 to display the application topology graph of the first snapshot and the application topology graph of the second snapshot, along with visual indications of changes between the first and second snapshots. Analysis system 140 may use difference module 148 to determine the difference between snapshots and facilitate the analysis of changes in the distributed application topology over time. Analysis system 140 may generate UI 152 as including a dedicated change analysis widget that presents a structured summary of alterations within the application topology. The widget may provide detailed insights into changes and their implications in four sections-New Alarms, Resolved Alarms, Added Nodes, Removed Nodes and Path Changes.

Analysis system 140 may generate UI 152 as visually highlighting changes between snapshots of the distributed application topology. Analysis system 140 may visually highlight various types of changes within the application topology to enhance user comprehension. Analysis system 140 may generate UI 152 as visually highlighting new alarms, resolved alarms, added nodes, and removed nodes and distinguish them using different colors and labels to enable SREs to quickly identify areas requiring attention. For example, analysis system 140 may generate UI 152 with the widget offering insights into changes in paths between "App Services" and "Network Devices" nodes that are critical for network connectivity. Analysis system 140 may highlight added and removed paths in one or more colors, such as blue and orange respectively, within the displayed application topology graphs. In addition, analysis system 140 may highlight the exact edge that has been added/removed using an edge label and icon and thereby facilitate precise analysis of network alterations.

Analysis system 140 may determine the criticality of changes in paths between nodes 160. Analysis system 140 may assess the criticality of path changes in real-time by leveraging alarm and critical log data (e.g., logs obtained by analysis system 140 from nodes 160). By analyzing the fluctuation in alarm and critical log counts along a changed path, analysis system 140 provides contextual guidance to users, indicating the potential impact of changes on system performance.

Analysis system 140 may enable an administrator to resolve alarms that are caused by path changes by taking one or more actions. Analysis system 140 may enable the administrator to take actions that include modifying a configuration of one or more of nodes 160, modifying paths between nodes 160, and/or otherwise reverting a configuration of the application topology of the distributed application. In an example, analysis system 140 generates UI 152 as including a visual element corresponding to a selection of snapshots taken of the topology of the distributed application. Analysis system 140 receives an indication from user device 150 that an administrator selected, via UI 152, a previous snapshot of the topology and reverts the topology from the current topology the selected topology. Based on the receipt of the indication, analysis system 140 may direct network controller 124 and/or orchestrator 130 to modify the configuration of the distributed application to revert the application topology. Modifying the configuration of the distributed application may involve reconfiguring one or more of the nodes, rescheduling services to different compute nodes, or other actions. In some cases, the administrator may modify the configuration of nodes 160 to reconfigure the distributed application to manually address an alarm. This may include the administrator interacting with orchestrator 130, network controller 124, and/or nodes 160. Reconfiguring the distributed application may have the effect of reconfiguring the application topology.

Thus, in some examples, analysis system 140 causes one or more components of computing infrastructure 100 to remediate alarms caused by path changes. Analysis system 140 may automatically cause the one or more components to remediate the alarms by reverting or otherwise modifying the topology of the distributed application. In an example, analysis system 140 determines that an alarm associated with service 122A is caused by a path change. Analysis system 140 provides an indication to network controller 124 to revert the configuration of the topology. Network controller 124 and orchestrator 130 revert the topology of the distributed application to a previous configuration to undo the path change.

The techniques of this disclosure may provide one or more technical advantages. For example, the techniques of this disclosure may enable an analysis system to identify alarms that are caused by changes to paths between nodes as opposed to other causes. The techniques of this disclosure further enable the analysis system to revert changes to a topology of a distributed application to resolve the underlying causes of an alarm. Through leveraging information indicating changes in the topology the distributed application, the techniques may enable faster diagnosis and remediation of distributed application performance. In another example, by offering a user-friendly visual interface, color-coded visualizations, and detailed node information, analysis system 140 streamlines the process of identifying changes, making it significantly easier for SREs to analyze and understand alterations in application topologies. Analysis system 140 addresses a persistent challenge in the field of system reliability and contributes to the proactive management of application infrastructure.

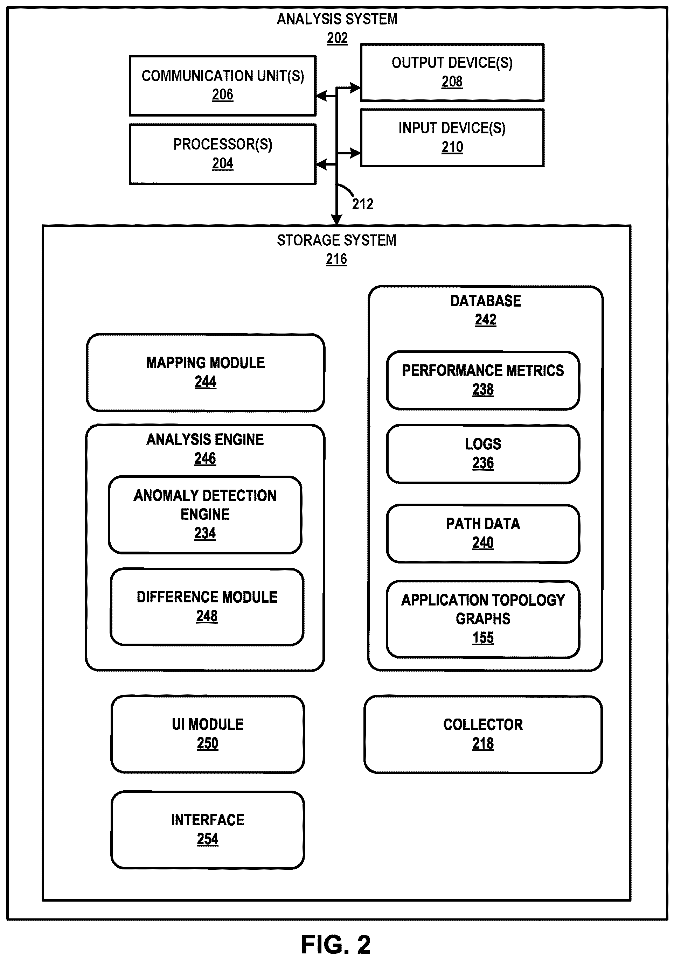

FIG. 2 is a block diagram illustrating an example analysis system 202, in accordance with techniques described in this disclosure. Analysis system 202 may be similar to analysis system 140 as illustrated in FIG. 1 and provide similar functionality. Analysis system 202 may be implemented as any suitable computing system, such as one or more server computers, workstations, mainframes, appliances, cloud computing systems, and/or other computing systems that may be capable of performing operations and/or functions described in accordance with one or more aspects of the present disclosure. In some examples, computing system 202 represents a cloud computing system, server farm, and/or server cluster (or portion thereof) that provides services to other devices or systems. In other examples, computing system 202 may represent or be implemented through one or more virtualized compute instances (e.g., virtual machines, containers) of a cloud computing system, server farm, data center, and/or server cluster.

In the example of FIG. 2, analysis system 202 may include one or more processor(s) 204, communication units 206, one or more output devices 208, one or more input devices 210, interconnection 212, and one or more storage devices of storage system 205. One or more of the devices, modules, storage areas, or other components of computing system 202 may be interconnected to enable inter-component communications (physically, communicatively, and/or operatively). In some examples, such connectivity may be provided by through communication channels which may represent one or more of a system bus, a network connection, an inter-process communication data structure, or any other method for communicating data.

One or more of processor(s) 204 may implement functionality and/or execute instructions associated with analysis system 202 or associated with one or more modules illustrated herein and/or described below. One or more of processor(s) 204 may be, may be part of, and/or may include processing circuitry that performs operations in accordance with one or more aspects of the present disclosure. Examples of processor(s) 204 include microprocessors, application processors, display controllers, auxiliary processors, one or more sensor hubs, and any other hardware configured to function as a processor, a processing unit, or a processing device. Analysis system 202 may use one or more processor(s) 204 to perform operations in accordance with one or more aspects of the present disclosure using software, hardware, firmware, or a mixture of hardware, software, and firmware residing in and/or executing at analysis system 202.

One or more of communication units 206 of analysis system 202 may communicate with devices external to analysis system 202 by transmitting and/or receiving data, and may operate, in some respects, as both an input device and an output device. In some examples, communication units 206 may communicate with other devices over a network. In other examples, communication units 206 may send and/or receive radio signals on a radio network, such as a cellular radio network. In other examples, communication units 206 of analysis system 202 may transmit and/or receive satellite signals on a satellite network. Examples of communication units 206 include a network interface card (e.g., such as an Ethernet card), an optical transceiver, a radio frequency transceiver, a GPS receiver, or any other type of device that can send and/or receive information. Such communications may adhere to, implement, or abide by appropriate protocols, including Transmission Control Protocol/Internet Protocol (TCP/IP), Ethernet, or other technologies or protocols.

One or more of input devices 210 may represent any input devices of analysis system 202 not otherwise separately described herein. Input devices 210 may generate, receive, and/or process input. For example, one or more input devices 210 may generate or receive input from a network, a user input device, or any other type of device for detecting input from a human or machine.

One or more output devices 208 may represent any output devices of analysis system 202 not otherwise separately described herein. Output devices 208 may generate, present, and/or process output. For example, one or more output devices 208 may generate, present, and/or process output in any form. Output devices 208 may include one or more USB interfaces, video and/or audio output interfaces, or any other type of device capable of generating tactile, audio, visual, video, electrical, or other output. Some devices may serve as both input and output devices. For example, a communication device may both send and receive data to and from other systems or devices over a network.

Interconnection 212 may include any type of connection between components of analysis system 200. Interconnection 212 may include hardware and/or software buses, interconnects, and/or other types of connections between the components of analysis system 202. For example, interconnection 212 may enable processors 204 to execute instructions stored by storage system 216.

One or more storage devices of storage system 216 within analysis system 202 may store information for processing during operation of analysis system 202. Storage system 216 may store program instructions and/or data associated with one or more of the modules described in accordance with one or more aspects of this disclosure. One or more processors 204 and one or more storage devices may provide an operating environment or platform for such modules, which may be implemented as software, but may in some examples include any combination of hardware, firmware, and software. One or more processors 204 may execute instructions and one or more storage devices of storage system 216 may store instructions and/or data of one or more modules. The combination of processors 204 and storage system 216 may retrieve, store, and/or execute the instructions and/or data of one or more applications, modules, or software. Processors 204 and/or storage devices of storage system 216 may also be operably coupled to one or more other software and/or hardware components, including, but not limited to, one or more of the components of analysis system 202 and/or one or more devices or systems illustrated as being connected to analysis system 202.

Processors 204 execute collector 218, which may be a software component of analysis system 202 that obtains data from nodes of a distributed application, such as nodes 160 as illustrated in FIG. 1. Collector 218 may obtain data that is reported by nodes 160 that includes performance data of the nodes, dependencies of the nodes and other information. Collector 218 may include one or more application trace tool (e.g., Jaegar) that collector 218 uses to determine paths between nodes 160. For example, collector 218 may use an application trace tool to determine a path between two services of the distributed application. Collector 218 may store data obtained from nodes 160 in database 242.

Storage system 216 includes database 242, which may be a database maintained by analysis system 202. Database 242 may be similar to database 142 as illustrated and provide similar functionality. Database 242 may include information regarding performance of nodes 160 and paths between nodes 160 obtained by collector 218. In the example of FIG. 2, database 242 includes logs 236, performance metrics 238, and path data 240. Logs 236 may include logs obtained from nodes 160, for instance logs of errors experienced by nodes 160. Performance metrics 238 may include metrics regarding the performance of nodes 160. Path data 160 may include data regarding paths between nodes 160 obtained by an application trace tool of collector 218.

Processors 204 may execute mapping module 244, which may be a software component of analysis system 202 that generates graphs of a distributed application based on data obtained from nodes 160. Mapping module 244 may be similar to mapping module 144 as illustrated in FIG. 1 and provide similar functionality. Mapping module 244 may obtain data from database 242, such as path data 240 generated by collector 218, to generate graphs of the distributed application. Mapping module 244 may generate the graphs of the distributed application according on a periodic basis (e.g., minutes, hours, days, etc.) and/or in response to determining that a topology of the distributed application (e.g., based on changes indicated by path data 240).

Mapping module 244 may generate graphs that are snapshots of the distributed application and that are reflective of changes to the distributed application. Mapping module 244 may generate the graphs that are snapshots to facilitate the identification of changes to the topology and when issues initially appear. In an example, mapping module 244 generates graphs that are 15-minute snapshots of the topology of the distributed application. Mapping module 244 may store the generated graphs in database 242 as application topology graphs 155.

Storage system includes analysis engine 246, which may be a software module of analysis system 202 that analyzes data obtained by collector 218 and database 242. Analysis engine 246 may be similar to analysis engine 146 as illustrated in FIG. 1 and provide similar functionality. Analysis engine 246 may analyze the data stored in database 242 for one or more purposes that include identifying anomalies within the distributed application, determining differences between graphs of the distributed application, and/or other purposes.

Analysis engine 246 includes difference module 248 which may be a software component of analysis engine 246, such as a plugin, module, process, executable, and/or other type of software component that identifies difference between application topology graphs 155. Difference module 248 may be similar to difference module 148 as illustrated in FIG. 1 and provide similar functionality. Difference module 248 may compare application topology graphs 155 to identify differences between the topology of the distributed application that includes the removal of at least one node, the addition of at least one node, a change in paths between nodes, and/or other types of changes. In an example, difference module 248 obtains a first graph representative of a current topology of the distributed application from application topology graphs 155 and a second graph representative of a topology of the distributed application from an immediately preceding period of time. Difference module 248 compares the first and second graphs and identifies a path change between two nodes in the topology.

In some examples, difference module 248 dynamically evaluates the criticality of path changes. Leveraging data from alarms and critical logs associated with the path, difference module 248 provides contextual guidance to users, indicating whether the change is potentially disruptive or safe. streamlining decision-making processes. By analyzing the fluctuation in alarm and critical log counts along the changed path, difference module 248 may proactively alert users to potential network disruptions. In an example, difference module 248 determines that the latest topology indicates an increase in alarms and critical logs. Analysis system 202 issues a warning message, prompting SREs to take necessary corrective actions.

In some examples, difference module 248 may use one or more techniques to identify the differences between topology graphs. Difference module 248 may use a technique based on pseudo code that defines the logic for identifying the difference between two topology graphs, categorizing changes into New Alarms, Resolved Alarms, Added Nodes, and Removed Nodes. An example of the pseudo code is provided below:
- Loop through the nodes of the left (previous) graph
   - Check if the node exists in the right (latest) graph
      - If it does not exist:
         - Add the node id to removedNode List
         - If the node has any alarms:
            - Add the node id to resolvedAlarm List
      - If the node exists:
         - If the node has any alarms
            - Check if the alarm exists in the right (latest) graph
               - If it does not exist:
                  - Add the node id to resolvedAlarm List
               - If it does exist:
                  - Ignore
- Loop through the nodes of the right (latest) graph
   - Check if the node exists in the left (previous) graph
      - If it does not exist:
         - Add the node id to addedNode List
         - If the node has any alarms:
            - Add the node id to newAlarms List
      - If the node exists:
         - If the node has any alarms
            - Check if the alarm exists in the left (previous) graph
               - If it does not exist:
                  - Add the node id to newAlarms List
               - If it does exist:
                  - Ignore

In some examples, difference module 248 may identify path changes between two or more application topologies. Difference module 248 may use a technique based on pseudo, such as the below, to identify the differences:
- Define a function getAllPathsFromAppToNetwork that takes nodes, edges, and an application node as input
   - Initialize an empty array to store all the paths from the application node to the network node
      - Define a depth-first search function dfs that takes a node and a path as input
         - Add the current node to the visitedNodes set.
            - If the current node is a network node, add the current path to the paths array.
               - Otherwise, iterate over the edges
                  - Does the edge starts from the current node?
                     - If yes, find the next node connected by the edge
                        - Recursively call dfs with the next node and the updated path
                           - Call dfs with the application node and an empty path array
                           - Return the paths array

- To obtain paths for all the application nodes which are part of the left topology (e.g., a previous snapshot):
   - Define an empty object leftGraphPaths to store paths for each application node in the left graph
      - Perform for each node in leftGraphNodes
         - If the node represents an application (GraphLayer is 'App Services'):
            - Call getAllPathsFromAppToNetwork with leftGraphNodes, leftGraphEdges, and the current node
            - Store the resulting paths in leftGraphPaths indexed by the node's ID
- To obtain paths paths for all the application nodes which are part of the right topology or graph (e.g., a current snapshot or snapshot more recent in time than the left snapshot):
   - Define an empty object rightGraphPaths to store paths for each application node in the right graph
      - For each node in rightGraphNodes:
         - If the node represents an application (GraphLayer is 'App Services')
            - Call getAllPathsFromAppToNetwork with rightGraphNodes, rightGraphEdges, and the current node
               - Store the resulting paths in rightGraphPaths indexed by the node's ID
- Define an empty object pathDiff to store the differences between leftGraphPaths and rightGraphPaths
   - For each application node ID in leftGraphPaths/rightGraphPaths
      - Retrieve the paths for the current application node from both leftGraphPaths and rightGraphPaths
      - Define an empty array diff to store the differences between the paths
   - For each path in the paths of the current application node in leftGraphPaths
      - If the path is not found in the paths of the current application node in rightGraphPaths
         - Add the path to diff with a 'removed' type
            - For each path of the paths of the current application node in rightGraphPaths
               - If the path is not found in the paths of the current application node in leftGraphPaths:
                  - Add the path to diff with an 'added' type
                     - If diff is not empty:
                        - Store the differences in pathDiff indexed by the application node ID
                     - Output pathDiff

In another example, analysis system 202 may call one or more APIs of a set of APIs that are defined to initiate graph change analysis and query the results of the graph change analysis. An example of the APIs is provided below:

| Operation | Endpoint | Input | Output | |
|---|---|---|---|---|
| POST | /graph_analytics/change_analy sis | { First_graph: <<uuid> Second_graph: <<uuid>> } | <task_id> | Creates a task for performing change analysis |
| GET | /graph_analytics/change_analy sis | { Task_id: <id> LayerType: optional <e.g. All_layers, App_layer, pod_layer, Compute_layer, Network_layer> } | Layer: { Added_Nodes: [List of uuid] Deleted_Nodes: [List of uuid] Added_Edges: [list of edges] Deleted_Edges: [list of edges] Added_Alarms: [list of alarms] Resolved_Alarms: [list of alarms] } | Return the result of change analysis of two graphs. |
| | | | | It takes LayerType as optional input argument, by default change analysis is performed for all layers of the graph, unless specific layer is specified. |

Analysis engine 246 includes anomaly detection engine 234 which may be a software component of analysis engine 246, such as a plugin, module, process, executable, and/or other type of software component. Anomaly detection engine 234 may process data obtained by collector 218 to identify one or more anomalies or issues within the distributed application that include: traffic congestion, alarms generated by the nodes, dropped packets, failure to satisfy SLA/SLEs, and/or other issues. For example, anomaly detection engine 234 may process data from database 242 and determine that a particular node is congested with network traffic and is failing to meet an assigned SLA.

Analysis engine 246 may determine that one or more alarms detected by anomaly detection engine 234 are caused by a path change based on the comparison of the graphs. Analysis engine 246 may determine that an alarm is caused by a path change by correlating the alarm with the path change. In an example, analysis engine 246 correlates a path change that resulted in additional traffic being sent to a given node with an alarm raised by that node.

Storage system 216 includes UI module 250, which may be a software component of analysis system 202 that generates user interfaces. UI 254 may generate user interfaces that include one or more visual elements based on application topology graphs 155 generated by mapping module 244. For example, UI module 250 may generate a user interface that includes a visual representation of a graph of application topology graphs 155 of the topology of the distributed application. UI module 250 may generate user interfaces that include visual elements representative of paths between the nodes. For example, UI module 250 may generate a user interface that includes visual elements representative of nodes 160 and visual elements representative of nework paths between nodes 160.

UI module 250 may generate user interfaces that include visual indications representative of alarms associated with nodes 160. UI module 250 may generate the user interfaces using SVG and Canvas technology along with graph layout libraries to enable configurable and dynamic layouts. UI module 250 may generate the user interfaces with the visual indications of alarms visually associated with the corresponding nodes (e.g., visually connected or included in the visual elements representative of nodes 160), whether the alarm is new (e.g., first identified in the most recent snapshot of the distributed application), and whether the alarm is the result of a path change. In an example, UI module 250 generates a user interface based on the most recently generated graph of the topology of the distributed application, with the user interface includes visual representations of nodes 160 and a visual representation of an alarm associated with one of the nodes.

In some examples, UI module 250 generates user interfaces that highlight changes in paths between "App Services" nodes and "Network Devices" nodes. By visually representing added and removed paths in blue and orange colors respectively, UI module 250 may enable SREs to gain immediate insights into alterations in network connectivity. In addition, UI module 250 may display path changes to empower SREs to make informed decisions regarding network configuration and troubleshooting. UI module 250 may enable SREs to assess the impact on system performance and take necessary actions to maintain optimal network functionality based on the altered paths identified by analysis system 202. Further, UI module 250 may provide a single portal for application-aware assurance that offers visibility for both infrastructure associated with an enterprise that manages data center 101 as illustrated in FIG. 1 and third-party infrastructure. For instance, UI module 250 may facilitate the identification of network issues promptly (e.g., meant time to identify or MTTI) through anomaly detection and root cause analysis.

Storage system 216 includes interface 254, which may be an interface that facilitates access to functionality of analysis system 202. Interface 254 may be similar to interface 154 and provide similar functionality. For example, interface 254 may expose an API that enables another device to call functions of analysis system 202. Interface 254 may expose an API that enables another device to call a graph difference function, such as the functionality provided by difference module 248. An example operation of the API is provided below:

| **Operati on** | **Endpoint** | **Input** | **Output** | |
|---|---|---|---|---|
| GET | application/topology/c hange_analysis | { "previousGraphId": <uuid>, "latestGraphId": <uuid> } | { "addedNodes": List<uuid>, | This API will return the difference between two application topologies. |
| | | | "removedNodes": List<uuid>, | |
| | | | "newAlarms": List<uuid>, | |
| | | | "resolvedAlarms": List<uuid> } | |

In some examples, interface 254 may define an API to fetch path changes between application and network nodes. An example operation is provided below:

| **Operation** | **Endpoint** | **Input** | **Output** | |
|---|---|---|---|---|
| GET | application/topology/ne twork_path_changes | { | { | This API will return the Network path changes between two application topologies. |
| | | "previousGraphId": <uuid>, | "addedPaths": { | |
| | | "latestGraphId": <uuid> } | "<application node uuid>" : [ | |
| | | | List<node uuid>, | |
| | | | List<node uuid> ] }, | |
| | | | "removedPaths": { | |
| | | | "<application node uuid>" : [ | |
| | | | List<node uuid>, | |
| | | | List<node uuid> ] } } | |

In some examples, analysis engine 246 may generate instructions to remediate the topology of the distributed application. Analysis engine 246 may generate instructions to cause one or more devices, such as network controller 124 and/or orchestrator 130 as illustrated in FIG. 1, to modify the topology of the distributed application in one or more ways that include reverting the topology to a previous configuration (e.g., a configuration of the topology represented by application topology graphs 155), adding one or more nodes, removing one or more nodes, reconfiguring one or more nodes, modifying one or more communications paths, and/or other ways. Analysis engine 246 may cause analysis system to provide the instructions to one or more recipients.

Analysis system 202 may provide a comprehensive solution for analyzing changes in application topology over time. By integrating visual representations, dynamic criticality assessment, and proactive alerting mechanisms, analysis system 202 may enable SREs to gain a deeper understanding of network alterations and their implications, ultimately improving system reliability and performance. For example, analysis system 202 may perform Topology Graph Change Analysis and revolutionize the way SREs and administrators manage application topology changes, providing advanced insights and decision support capabilities to enhance system reliability and performance optimization.

Analysis system 202 may enable a range of functionality to improve the way administrators and Site Reliability Engineers (SREs) gain insights into application architectures. Packed with intuitive features, analysis system 202 not only provides a holistic view of the application but also offers interactive tools for efficient troubleshooting and in-depth analysis. Analysis system 202 may include several key components that enable troubleshooting and analysis that include:
1. Support for Multiple Layouts and User Selection Persistence:
   - The topology supports both Hierarchical and Graphical layouts, catering to user preferences.
   - The system remembers the last user selection, ensuring a consistent experience across sessions.
2. Hierarchical Layout with Rotate Option:
   - The Hierarchical layout includes a rotate option with four views (top bottom, bottom top, left-right, and right-left), enhancing flexibility in visualizing the application structure.
3. Unique Node Representation:
   - Analysis system 202 may depict each layer node with unique images and colors, enhancing visual clarity and making it easy to distinguish between different components.
4. Dynamic Layer Configuration:
   - The topology is designed to support any number of layers, allowing for scalability with minor configuration changes.
5. Detailed Node and Edge Information:
   - SREs may click on individual nodes to access detailed information, such as IP Address, Metrics, Anomalies, and Interfaces.
   - Clicking on edges provides information about the connection, metrics, and interfaces between nodes.
6. Alarm Visualization and Root Cause Analysis (RCA):
   - Analysis system 202 may highlight nodes with identified alarms with unique images and indicators.
   - SREs may click on alarmed nodes to view more information, including metrics causing the alarm, and initiate a Root Cause Analysis with the "Run RCA" button.
7. Critical Log Indicators:
   - Analysis system 202 may visually indicate nodes with critical logs, and SREs may click on these nodes to access detailed critical logs identified by the system.
8. Grouping/Ungrouping of Layers:
   - The topology supports the grouping and ungrouping of layers, providing organizational flexibility.
9. Alarm Highlighting:
   - Analysis system 202 may selectively highlight alarms, enabling SREs to concentrate on identified issues.
10. Zoom and Navigation Features:
   - The topology supports zoom in, zoom out, and reset to default state functionalities for better visualization.
   - Clicking on any node link (from external widget) brings the SRE's focus to the specific node within the topology and facilitate navigation in large and complex architectures.

FIG. 3 is a block diagram illustrating an example application topology graph 300 ("graph 300") of a distributed application, in accordance with one or more techniques of this disclosure. FIG. 3 is described for example purposes in the context of FIG. 1.

Analysis system 140 may generate graph 300 using data obtained from nodes 160 and/or other data. Analysis system 140 may use one or more components, such as mapping module 144, to generate graph 300. In an example, analysis system 140 obtains data from nodes 160 that includes the status of nodes 160, paths between nodes 160, and other information. Mapping module 144 uses the information obtained from nodes 160 by analysis system 140 to generate graph 300.

Mapping module 144 may generate graph 300 as including one or more layers of nodes of the distributed application. In the example of FIG. 3, mapping module 144 generates graph 300 as including app service layer 312, instance layer 314, compute layer 316, leaf layer 318, and spine layer 320. Mapping module 144 may generate graph 300 as including one or more of the layers, where each layer represents a particular layer of nodes within a hierarchy of the distributed application. For example, app service layer 312 may include multiple nodes within an application service layer of the distributed application.

App service layer 312 includes service nodes 302A-302D (collectively "service nodes 302"). Service nodes 302 may be services of the distributed application, such as services 122, that enable functionality of the distributed application. Service nodes 302 may communicate with each other, such as using remote procedural calls, as part of enabling the functionality of the distributed application. In the example of FIG. 3, service node 302A communicates with service nodes 302B-302D, service node 302C communicates with service node 302A, and service node 302D communicates with service node 302C. In addition, service nodes 302 may communicate with nodes, such as instances, that are included in instance layer 314. In the example of FIG. 3, service node 302A communicate with instance node 304B, service node 302B communicates with instance node 304A, services nodes 302C-302D communicate with instance node 304C, and service node 304D communicates with instance node 304D. Service nodes 302 may communicate with each other and nodes in instance layer 314 along network paths through the topology of the distributed application. In some cases, client nodes may be included in app service layer 312. Client nodes represent external clients. Services 122 of FIG. 1 may be represented by service nodes 302 of app service layer 312.

Instance layer 314 includes instance nodes 304A-304D (collectively "instance nodes 304"), which may represent virtual compute instances, such as Kubenetes Pods, virtual machines, one or more containers, or other virtual compute instances. Instance nodes 304 may communicate amongst themselves and with nodes in layers above and below instance layer 314 (e.g., app service layer 312 and/or compute layer 316) as part of the network paths among the nodes of graph 300. In the example of FIG. 1, instance nodes 304 communicate with service nodes 304 and compute node 306 of compute layer 316. Instances 126 of FIG. 1 may be represented by instance nodes 304 of instance layer 314.

Compute layer 316 includes compute node 306, which may represent one or more types of compute nodes. For example, compute node 306 may be a hardware node, a virtualized execution environment, or other type of compute nodes that executes the instructions of app nodes 302 and instance nodes 304. As part of providing the execution environment for app nodes 302 and instance nodes 304, compute nodes 316 may communicate with other compute nodes 314 via leaf layer 318 and spine layer 320 as part of the network paths of the distributed application. Compute nodes 110 of FIG. 1 may be represented by compute nodes 306 of compute layer 316.

Leaf layer 318 includes leaf nodes 308A-308B (collectively "leaf nodes 308"), which may represent one or more types of network devices. For example, leaf nodes 308 may represent leaf switches within the topology of the distributed application represented by graph 300. Leaf nodes 308 may communicate with other nodes in different layers of the topology of the distributed application. In addition, leaf nodes 308 may facilitate the routing of network traffic within a network that supports the distributed application. For example, leaf node 308 may route network traffic from instance nodes 304 to various recipients within a network. In the example of FIG. 3, leaf node 308A is connected to spine node 310, and leaf node 308B is connected to spine node 310.

Spine layer 320 includes spine node 310, which may represent one or more types of network devices. For example, spine node 310 may represent a chassis switch that routes network traffic within a network as part of the network paths between nodes. Spine node 310 may correspond to one of chassis switches 18 of FIG. 1.

Analysis system 140 may use graphs, such as graph 300, to determine the changes in the application-to-network topology over time. Analysis system 140 may generate a knowledge graph for a given monitoring window that captures the relationship between an application and its underlying infrastructure components during that time window. A knowledge graph is also a form of application topology graph, but it is augmented with additional knowledge.

Analysis system 140 may use a Graph Generator component in an analytics engine aims to provide a Single Pane of Glass View of an application and the underlying infrastructure including orchestration layer, hardware and network in form of a single unified knowledge graph. Analysis system 140 may implement metric/telemetry collection pipelines which collect metrics from various sources into a central metric engine and relevant logs into a search function. Analysis system 140 may utilizes this telemetry data alone with the network topology data to build the complete system topology. Analysis system 140 may use further metric data from a metric engine and logs from a log service to augment the topology with additional telemetry data. Analysis system 140 may identify relevant telemetry for the analysis period for each node and edge of the topology graph depending on the type of node/edge and augment in the knowledge graph. Analysis system 140 may process each of the metric datapoints for every node/edge of knowledge graph by a real time Machine Learning based Anomaly Detection service to detect anomalies. Analysis system 140 may highlight nodes/edges with detected anomalies back in the knowledge graph.

Analysis system 140 may generate the knowledge graph as serving as a snapshot of the infrastructure and application state over a given analysis period including complete topology and relevant telemetry. Analysis system may utilize the knowledge graph generated by graph generator for one or more of the graph analytics algorithms and use cases as the source of topology and telemetry data.

Analysis system 140 may generate knowledge graphs as including the following layers:
- App Services Layer:
   o The app services layer may be based on one or more metrics and represent application services in one of more input namespaces deployed in an application cluster and request flows between the application services.
   ∘ Key telemetry for this layer may include:
      ▪ Request Latency: Measures average, p50, p90, and p95 latency across application deployments. Anomalies in latency are tracked.
      ▪ Throughput (Requests Per Second): Tracks average request rates over per minute intervals.
      ▪ Request Count: Monitors total request counts (minutely average) and tracks anomalies, particularly for 2xx, 4xx, and 5xx responses.
         Anomalies: Detects anomalies in latency, throughput, request count, and APM metrics (response time, error rate).
- Instances Layer:
   o Based on one or more metrics, represents one or more application instances for each application service.
   o This layer may capture telemetry focused on resource utilization and performance metrics for individual application instance, including CPU, memory, disk, and network usage, along with anomaly detection in these metrics.
   o Key telemetry may include:
      ▪ CPU Usage: Monitors overall and P95 CPU usage with anomaly detection.
      ▪ Memory Usage: Tracks memory usage in percentage and MB, including P95 usage over 1, 6, and 24 hours.
      ▪ Disk and Network: Monitors pod disk usage and network data (received/transmitted).
      ▪ Traffic and Request Metrics: Tracks incoming traffic, request rates, and latency, highlighting anomalies.
         Anomalies: Detects unusual patterns in CPU, memory, filesystem, and request latency for individual.
- Compute Layer:
   o Based on compute host metrics, the compute layer may represent compute hosts in a data center.
   o Key telemetry may include:
      ▪ CPU Usage: Current and P95 CPU usage for the last 1, 6, and 24 hours.
      ▪ Memory Usage: Current and P95 memory usage for the last 1, 6, and 24 hours.
      ▪ Disk Usage: Current and P95 disk usage for the last 1, 6, and 24 hours.
      ▪ Network Performance: Packet drop counts and probes with packet loss.
      ▪ Anomalies: Detects anomalies in CPU, memory, disk, and network metrics.
- Network Devices Layer:
   o Based on the topology, the layer may include leaf and/or spine included in a datacenter fabric.
   ∘ Key telemetry may include:
      ▪ Interface Counters: Measures the transmission and reception rates of data and error packets on network interfaces.
      ▪ Percentile Metrics: Provides 95th percentile statistics for Tx/Rx rates and error packets over specified time frames.
      ▪ Events: Captures specific network-related events from a topology engine for enhanced monitoring.
      ▪ Anomalies: Detects deviations in performance metrics for Tx/Rx rates and error packets.

Analysis system 140 may include a metric parser that is responsible for interpreting an input metric timeseries data point as a node/edge on the knowledge graph. Each metric parser may encapsulate the logic to handle a given class of metrics for a specific metric source. Analysis system 140 may include metric parsers that are config driven and a new metric parser may be implemented to add support for a new metric source or a new class of metrics.

Analysis system 140 may generate a knowledge graph that captures alarms related to performance metrics for each node in the knowledge graph. When two such graphs are created for adjacent time windows, analysis system 140 may perform graph change analysis to answer one or more of the following example questions:
1. How has the application layer evolved between the two adjacent time windows?
2. How has the underlying compute layer evolved between two adjacent time windows?
3. How has the health of the network evolved between adjacent time windows?
4. How many new nodes/edges are added/deleted between two monitoring time windows?
5. How have alarms evolved/changed between two monitoring time windows across all layers in the graph?

Analysis system 140 may compare two knowledge graphs as showing how the graph has changed between two time windows. For example, analysis system 140 may compare a first knowledge graph for the application topology at a first time and the second knowledge graph to determine an alarm indicative of an issue in the computing infrastructure is caused by a change to the path. Analysis system 140 may generate a knowledge graph as showing a per-Layer analysis regarding changes between two graphs generated over two different monitoring windows. For example, analysis system 140 may determine that the following below changes have occurred between two graphs:
Layer 1 (Application):
   - Added Node: 13
   - Deleted Node: None
   - Added Edges: 13-6
   - Deleted Edge: None
   - Added Alarms: 13
   - Resolved Alarms: None
Layer 2 (Virtual Compute Instance Layer):
   - Added Node: 14
   - Added Edge: 13-14
   - Deleted Edge: None
   - Added Alarm: None
   - Resolved Alarm: None
Layer 3 (Compute Layer):
   - Added Node: None
   - Deleted Node: None
   - Added Edge: None
   - Deleted Edge: None
   - Added Alarm: None
   - Resolved Alarm: 3
Layer 4 (Network Probe Layer):
   - Added Node: None
   - Deleted Node: 9
   - Added Edge: None
   - Deleted Edge: 8-9
   - Added Alarm: 11
   - Resolved Alarm: None
Layer 5 (Network Device Layer):
   - Added Node: None
   - Deleted Node: 10
   - Added Edge: None
   - Deleted Edge: 9-10, 9-5
   - Added Alarm: 12
   - Resolved Alarm: None

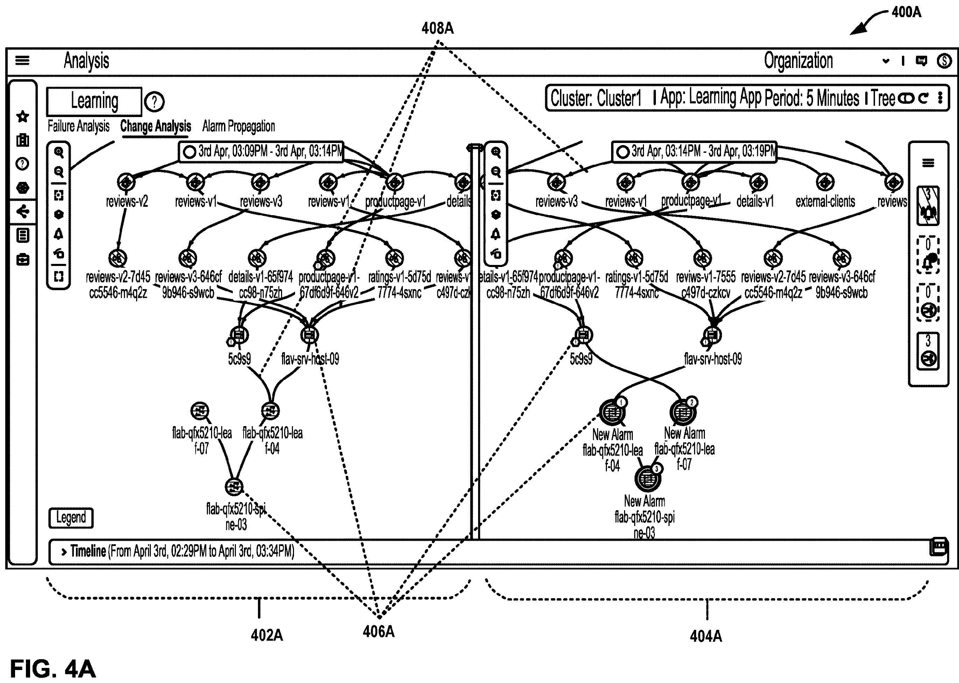

FIGS. 4A-4F are example user interfaces, in accordance with one or more techniques of this disclosure. For the purposes of clarity, FIGS. 4A-4F are described in the context of FIG. 1. For example, analysis system 140 may generate the user interfaces of FIGS. 4A-4F as instances of UI 152 for display via one or more display components and/or user device 150.

**In** the example of FIG. 4A, analysis system 140 generates UI 400A as including first snapshot 402A and second snapshot 404A, which may be representations of snapshots of the distributed application topology. Analysis system 140 may obtain data regarding the topology from a plurality of nodes 160 and generate snapshots that are representative of the configuration of the topology within a given time window. Analysis system 140 may generate UI 400A as divided into two sections, with each section dedicated to rendering a separate topology graph (e.g., first snapshot 402A and second snapshot 404A). Analysis system 140 may utilize HTML canvas to render two topology graphs simultaneously - the left (previous) graph and the right (latest) graph. For example, analysis system 140 may generate first snapshot 402A as representative of the topology within a first window of time and second snapshot 404A as representative of the topology within a second, succeeding period of time.

Analysis system 140 may generate UI 400A as including node icons 406A, which may be representations of nodes 160. Analysis system 140 may generate node icons 406A as visual elements of UI 400A that include visual indications of the type of node that each of node icons 406A represents (e.g., service, instance, compute, spine, leaf, etc.). For example, analysis system 140 may generate first snapshot 402A as including a plurality of node icons 406A based on a first topology of the distributed application and second snapshot 404A as including a plurality of node icons 406A based on a second topology of the distributed application.

Analysis system 140 may generate UI 400A as including paths 408A as representative of paths between the nodes represented by node icons 406A. Paths 408A may represent physical and/or software communications paths between nodes of the distributed application. For example, one of paths 408A may represent a path between a spine node and a leaf node of nodes icons 406A.

Analysis system 140 may generate UI 400A as including visual indications of alarms associated with node icons 406A. In the example of FIG. 4A, analysis system 140 generates first snapshot 402A as including visual indications of an alarm on an instance node and an alarm on a compute node. Analysis system 140 may generate the visual indications based on alarms regarding one or more issues with node icons 406A, such as failure to satisfy an SLA/SLE, hardware problems, misconfiguration, exceeding threshold traffic values, exceeding resource utilization thresholds, and/or other issues.

Analysis system 140 may generate the visual indications of alarms as including visual indications of new alarms. Analysis system 140 may determine whether one or more alarms present in a current or comparatively more recent snapshot of the distributed application topology are present in a previous or comparatively older snapshot. In the example of FIG. 4A, analysis system 140 determines that three alarms associated with two spine nodes and one leaf node in second snapshot 404A are new alarms, based on those alarms not being present in first snapshot 402A. Analysis system 140 generates UI 400A with second snapshot 404A including visual indications (e.g., "NEW ALARM" as illustrated in FIG. 4A, different coloration/shading, etc.) of the new alarms visually associated with the nodes experiencing the new alarms.

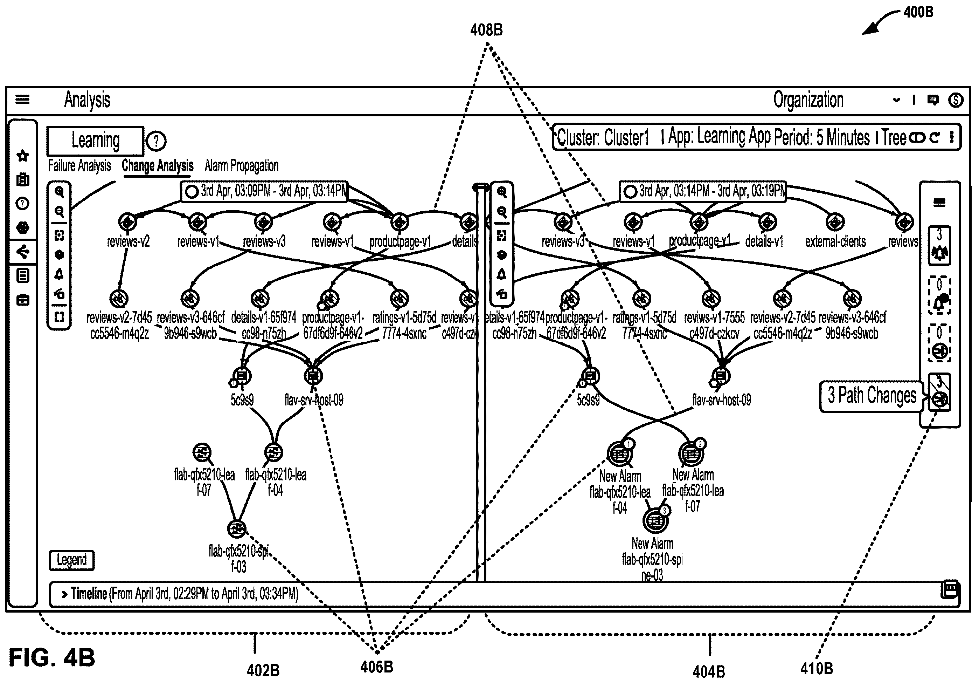

In the example of FIG. 4B, analysis system 140 generates UI 400B, which may be similar to UI 400A as illustrated in FIG. 4A. For example, analysis system 140 may generate UI 400B as a subsequent (e.g., in time) instance of UI 400A.

Analysis system 140 generates UI 400B as including first snapshot 402B and second snapshot 404B as representative of snapshots of the distributed application topology. First snapshot 402B and second snapshot 404B may include node icons 406B and paths 408B, with node icons 406B as visual representations of nodes 160 and alarms associated with nodes 160, and paths 408B as visual representations of paths between nodes 160. In addition, analysis system 140 may generate second snapshot 404B as including visual indications of new alarms (e.g., alarms not present in first snapshot 402B).

In the example of FIG. 4B, analysis system 140 generates UI 400B as including path change icon 410B, which may be a visual element of UI 400B that corresponds to requesting the display of a list of new alarms. A user interacting with UI 400B may hover a cursor over path change icon 410B or otherwise interact with path change icon 410B. In response to the user interaction, analysis system 140 may generate an instance of UI 400B as including a visual window indicative of the number of new alarms. In the example of FIG. 4B, analysis system 400B generates UI 400B as including a visual window indicative of the number of path changes ("3 PATH CHANGES") from the distributed application topology illustrated in first snapshot 402B. In addition to indicating new alarms, path change icon 410B may indicate one or more resolved alarms.

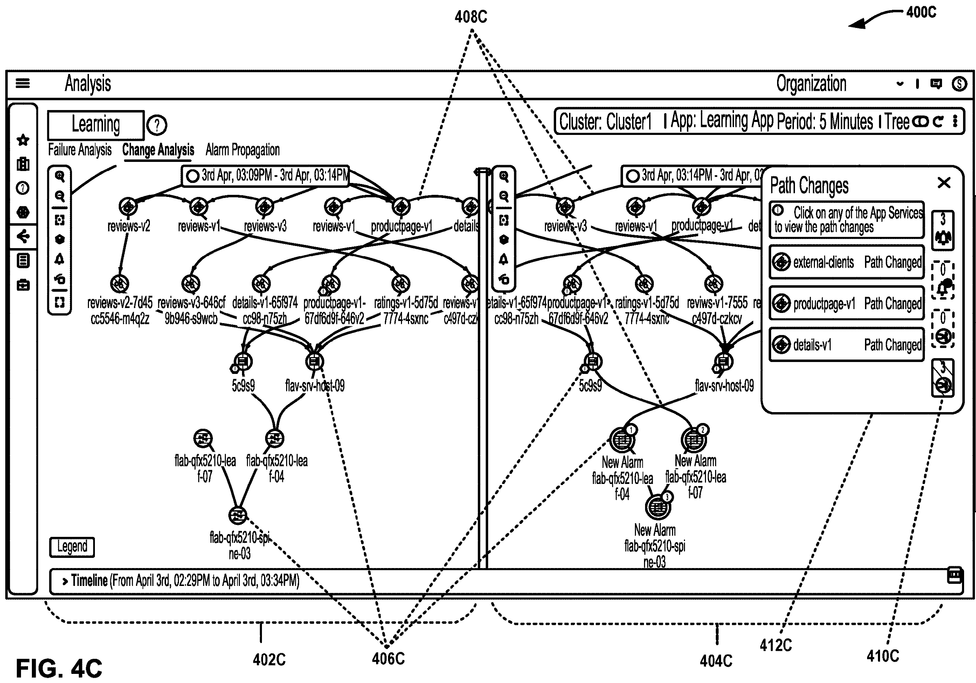

In the example of FIG. 4C, analysis system 140 generates UI 400C, which may be similar to and/or an instance of UI 400B or UI 400A. For example, analysis system 140 may generate UI 400C as a subsequent instance of UI 400B that includes similar visual elements (e.g., first snapshot 402C, second snapshot 404C, node icons 406C, paths 408C, and path change icon 410C).

Analysis system 140 may generate UI 400C based on user interaction with path change icon 410C. In an example, analysis system 140 receives user input consistent with an interaction with path change icon 410C. Analysis system 140 generates UI 400C based on the user input.

Analysis system 140 may generate UI 400C as including path change window 412C, which may be a visual element of UI 400C that includes indications of path changes of the paths between nodes 160. Analysis system 140 may generate path change window 412C as including identifiers of the nodes associated with the path changes (e.g., "external-clients") and indication of the path change (e.g., "Path Changes"). Analysis system 140 may enable or prompt a user to select one or more of the node identifiers to view further information regarding the path change (e.g., "Click on any of the App Services to view the path changes").

Analysis system 140 may render a detailed widget (e.g., path change window 412C) on the right side of the page, providing information on New Alarms, Resolved Alarms, Added Nodes, Removed Nodes and Network Path changes. In addition, analysis system 140 may generate or render path change window 412C as showing new alarms with a tooltip, with the tooltip displaying the metrics causing the alarm. For example, analysis system 140 may generate path change window 412C with metrics regarding anomalous interface counters illustrated as visually associated with a network device identifier. Analysis system 140 may generate path change window 412C as including graph changes (added/removed nodes) and path changes.

Analysis system 140 may generate the widget of path change window 412C as accepting the graph diff data as input for New Alarms/Resolved Alarms/Added/Removed Nodes section, which may be fetched from a backend. In addition, the widget may accept the path changes data as input for Network Path changes section, and even this may be fetched from the backend. The widget may provide a callback function onNodeNameClick(name: string, source: 'new alarms' | 'resolved alarm' | 'added' | 'removed' | 'path_change' ) that is triggered upon clicking a node name in the detailed widget. As part of the callback function execution, analysis system 140 may generate UI 400C with the corresponding node/path is highlighted within the topology graph and with the highlighting occurring on either the left or right graph based on the source of the change. The callback function may facilitate seamless user interaction, allowing SREs to quickly locate and focus on nodes/path within the extensive topology. Further, the unique combination of HTML canvas rendering, key-value pair data storage, and the proposed graph comparison methodology may provide an innovative solution for topology change analysis.

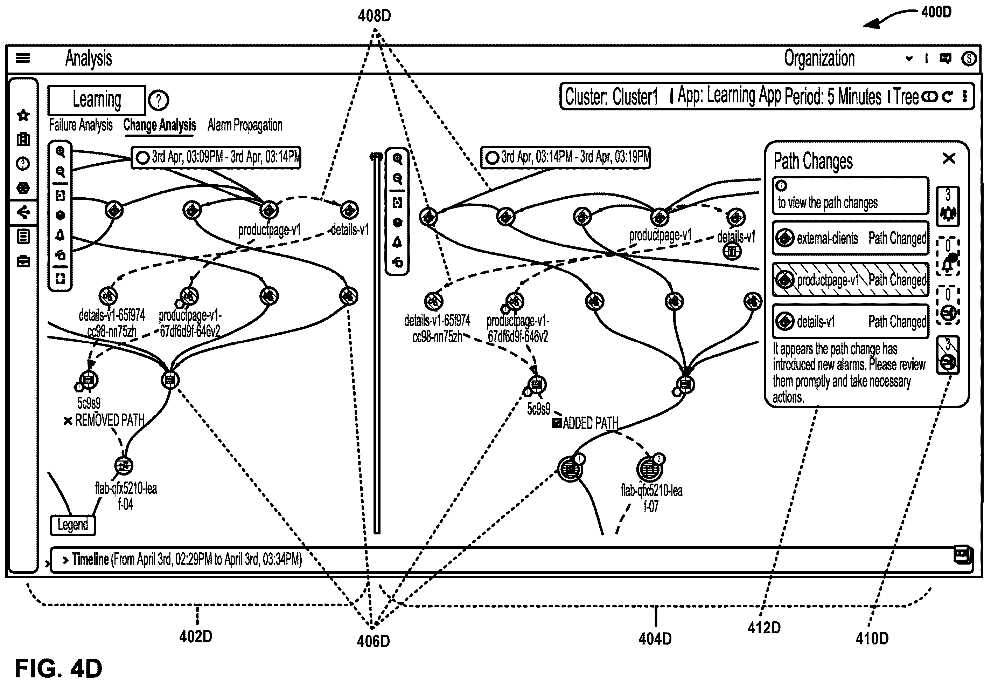

In the example of FIG. 4D, analysis system 140 generates UI 400D, which may be an instance of GUI 400C. For example, analysis system 140 may generate UI 400D as including first snapshot 402D, second snapshot 404D, nodes 406D, paths 408D, path change icon 410D, and path change window 412D among other visual elements. Analysis system 140 may generate UI 400D based on user input or interaction with a visual element of UI 400C. In an example, a user interacts with a visual element of UI 400C that corresponds to a node that has experienced a path change. Analysis system 140 generates UI 400D based on the interaction.

Analysis system 140 may generate UI 400D as including first snapshot 402D and second snapshot 404D as snapshots of the distributed application topology. Analysis system 140 may generate UI 400D as displaying only a portion of first snapshot 402D and/or second snapshot 404D. For example, analysis system 140 may generate UI 400D as focused or "zoomed in" on portions of the distributed application topology visually represented by first snapshot 402D and second snapshot 404D.

Analysis system 140 may generate UI 400D based on selection of a node identifier within path change window 410D. In the example of FIG. 4D, analysis system 140 receives the selection of "productpage-V1" within path change window 410D. Analysis system 140 generates UI 400D with path change window 410D including an indication that the selected path has caused one or more alarms ("It appears that the path change has introduced new alarms. Please review them promptly and take necessary actions"). In addition, analysis system 140 generates UI 400D with the representation of the distributed application topology focused on the representation of the changed path.

Analysis system 140 generates UI 400D as including path removal indicator 414D as visually indicating the removal of paths 408D and path addition indicator 416D as visually indicating the addition of paths 408D. Path removal indicator 414D may visually indicate the removal of one or more of paths 408D between snapshots via textual indicators (e.g., "X REMOVED PATH") and/or color/shading of the paths. Path addition indicator 414D may visually indicate the addition of one or more of paths 408D between snapshots via textual indicators (e.g., "ADDED PATH") and/or color/shading of the paths. In addition, analysis system 140 may generate UI 400D as including visual indication of other paths that have been impacted or are otherwise associated with the added/removed path.

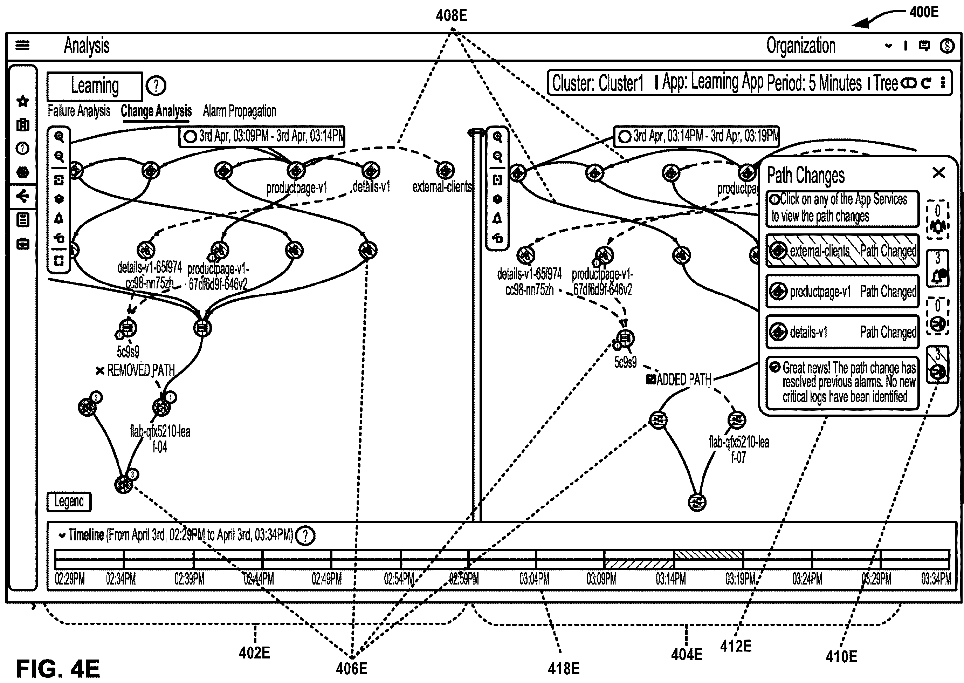

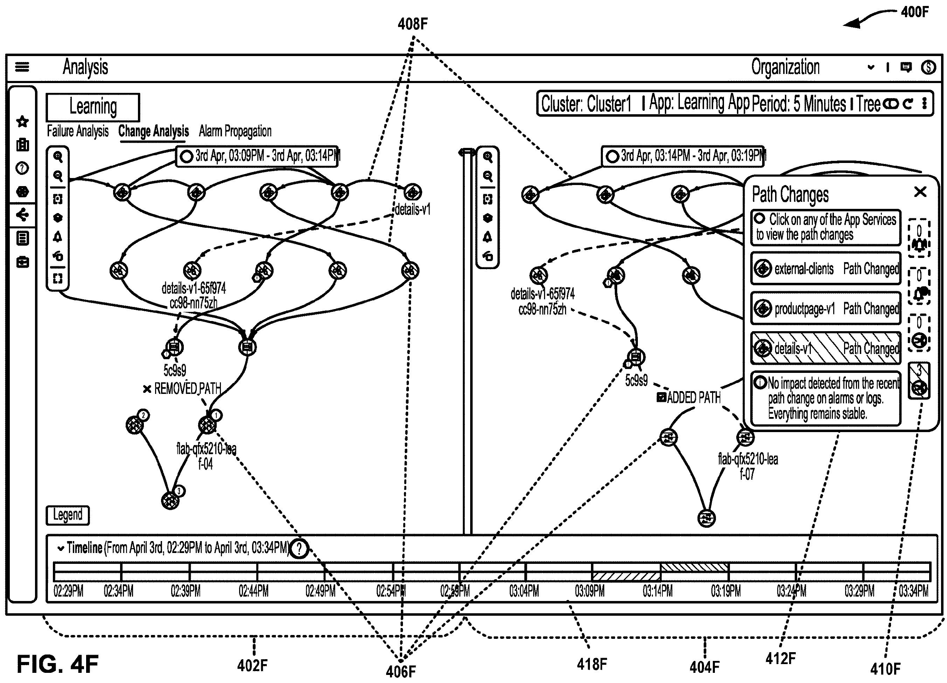

In the example of FIG. 4E, analysis system 140 generates UI 400E, which may be an instance of UI 400D as illustrated in FIG. 4. Analysis system 140 generates UI 400E as including first snapshot 402E, second snapshot 404E, nodes 406E, paths 408E, path change icon 410E, path change window 412E, path removal indicator 414E, and path addition indicator 416E, each of which may be similar to a corresponding visual element of UI 400D. For example, analysis system 140 may generate UI 400E where first snapshot 402E is a snapshot of the distributed application topology where a path change has caused an alarm and where second snapshot 404E is a snapshot of the distributed application topology where the alarm has been resolved.

Analysis system 140 generates UI 400E as including snapshot timeline 418E, which may be a visual element of UI 400E that represents a timeline of one or more snapshots taken of the distributed application topology and include an indication of the distributed application topologies illustrated by UI 400E (e.g., the topologies represented by first snapshot 402E and second snapshot 404E). Snapshot timeline 418E may enable a user to select one or more distributed application topologies for display in a side-by-side comparison (e.g., how first snapshot 402E and second snapshot 404E are displayed alongside each other in UI 400E). In addition, snapshot timeline 418E may enable a user to visualization changes between one or more snapshots. For example, snapshot timeline 418E may enable a user to view a change in the distributed application topology that resolves an alarm caused by a path change. For example, snapshot time 418E of the page may display the last 10 snapshots of the application topology. Analysis system 140 may provide the user with two handlers to select the previous and latest application snapshot to compare the changes in the application topology.

Analysis system 140 may determine that one or more changes have resolved the alarm associated with a path change. For example, analysis system 140 may determine that reverting a path change has resolved an alarm associated with the path change. Analysis system 140 may generate UI 400E as including a visual indication of the changes that have resolved the alarm. In the example of FIG. 4E, analysis system 140 generates path change window 412E as including a textual indication that a path change has resolved an alarm (e.g., "Great News! the path change has resolved previous alarms. No new critical logs have been identified.").

In the example of FIG. 4F, analysis system 140 generates UI 400F, which may be an instance of UI 400E or any other UI of FIGS. 4A-4E. Analysis system 140 may generate UI 400F as including one or more visual elements, such as first snapshot 402F, second snapshot 404F, nodes 406F, paths 408F, path change icon 410F, path change window 412F, path removal indicator 414F, and path addition indicator 416F.

Analysis system 140 may generate UI 400F as illustrative of a path change between snapshots of the distributed application topology that has not resulted in an alarm. In an example, analysis system 140 determines that no new alarms have occurred between the topology represented by first snapshot 402F and the topology represented by second snapshot 404F. Analysis system 140 generates UI 400F as including first snapshot 402F, second snapshot 404F, and path change window 412F, with path change window 412F including a textual indication of the lack of alarms resulting from path changes (e.g., "NO IMPACT DETECTED FROM THE RECENT PATH CHANGE ON ALARMS OR LOGS. EVERYTHING REMAINS STABLE"). Analysis system 140 may output GUI 400F for display.

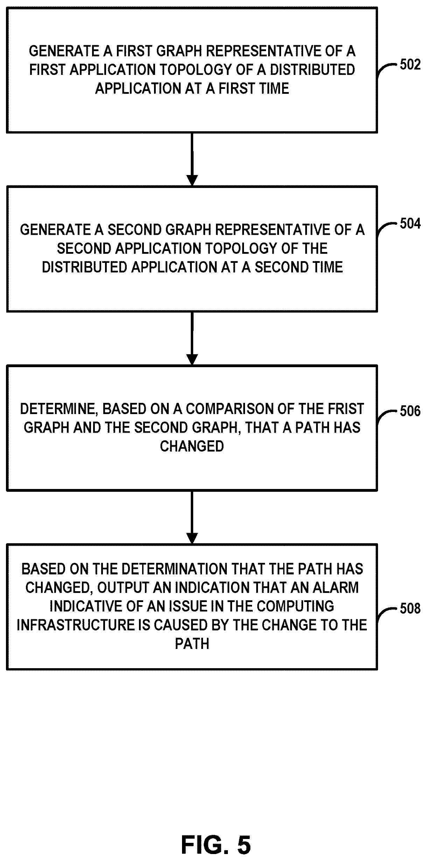

FIG. 5 is a flow diagram illustrating an example operation of a computing system, in accordance with one or more techniques of this disclosure. FIG. 5 will be discussed in regard to FIG. 1.

A computing system, such as analysis system 140, generates a first graph representative of a first application topology of a distributed application at a first time, wherein the first application topology includes a first plurality of nodes of a computing infrastructure, such as computing infrastructure 100, distributed across a plurality of layers (502). Analysis system 140 may generate the first graph where the first application topology includes a first plurality of nodes of computing infrastructure 100 distributed across a plurality of layers. For example, analysis system 140 may use a module, such as mapping module 144, to obtain information from nodes 160.

Analysis system 140 generates a second graph representative of a second application topology of the distributed application at a second time (504). Analysis system 140 may generate the second graph where the second application topology includes a second plurality of nodes 160 of computing infrastructure 100 distributed across the plurality of layers. Analysis system 140 may generate periodic snapshots of the topology of the application within computing infrastructure 100. For example, analysis system 140 may generate snapshots of the topology according to a periodic schedule.

Analysis system 140 determines, based on a comparison of the first graph and the second graph, that a path has changed (506). Analysis system 140 may compare the first graph and the second graph to determine that one or more paths between nodes 160. For example, analysis system 140 may compare the first graph and the second graph to determine that a path between TOR switches 16 and chassis switches 18 has changed.

Analysis system 140, based on the determination that the path has changed, output an indication that an alarm indicative of an issues in computing infrastructure 100 is caused by the change to the path (508). Analysis system 140 may generate UI 152 as including one or more visual indications of the path change and that the path change is caused by the path change. In an example, analysis system 140 determines that a path has changed between a TOR switch and a chassis switch and that an alarm was caused by the path change. Analysis system 140 generates UI 140 as including a visual indication that the alarm was caused by the path change. Analysis system 140 outputs the UI for display. In some examples, analysis system 140 may provide data regarding UI 152 to user device 150 for user device 150 to output UI 152.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable data storage media comprising instructions that, when executed, cause one or more processors to perform one or more of the methods described above. For example, the computer-readable data storage media may store such instructions for execution by one or more processors.

A computer-readable medium may form part of a computer program product, which may include packaging materials. A computer-readable medium may comprise a computer data storage medium, such as random-access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media. Computer-readable storage media may be distributed among multiple packages, devices, or other components capable of being configured with computer instructions.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Thus, from one perspective, there have now been described techniques for a computing system that generates a first graph representative of a of a first application topology of a distributed application at a first time that includes a first plurality of nodes of a computing infrastructure across a plurality of layers. The computing system generates a second graph representative of a second application topology of the distributed application at a second time. The computing system determines, based on a comparison of the first graph and the second graph, that a path has changed. Based on the determination that the path has changed, the computing system outputs an indication that an alarm indicative of an issue in the computing infrastructure is caused by the change to the path.

Further examples of feature combinations taught by the present disclosure are set out in the following numbered clauses:
1. A computing system, comprising:
   memory; and
   processing circuitry in communication with the memory and configured to:
   generate a first graph representative of a first application topology of a distributed application at a first time, wherein the first application topology includes a first plurality of nodes of a computing infrastructure distributed across a plurality of layers;
   generate a second graph representative of a second application topology of the distributed application at a second time, wherein the second application topology includes a second plurality of nodes of the computing infrastructure distributed across the plurality of layers;
   determine, based on a comparison of the first graph and the second graph, that a path has changed; and based on the determination that the path has changed, output an indication that an alarm indicative of an issue in the computing infrastructure is caused by the change to the path.
2. The computing system of clause 1, wherein the processing circuitry is further configured to:
   based on the determination that the path has changed, modify a configuration of the distributed application in the computing infrastructure.
3. The computing system of clause 2, wherein to modify the configuration of the distributed application in the computing infrastructure, the processing circuitry is further configured to:
   modify the configuration to revert the second application topology of the distributed application to the first application topology of the distributed application.
4. The computing system of clause 1, 2 or 3, wherein the processing circuitry is further configured to:
   output, for display, a user interface that includes a visual representation of the second graph and the indication that an alarm indicative of an issue in the computing infrastructure is caused by the change to the path.
5. The computing system of clause 4, wherein the processing circuitry is further configured to generate the user interface to include a visual indication of the change to the path.
6. The computing system of clause 4 or 5, wherein the processing circuitry is further configured to: generate the user interface to include a visual representation of the first graph and the second graph.
7. The computing system of any preceding clause, wherein the output of the indication that the alarm indicative of an issue in the computing infrastructure is caused by the change to the path is further based on a determination that the alarm is present at the second time but was not present at the first time.
8. The computing system of any preceding clause, wherein the output of the indication that the alarm indicative of an issue in the computing infrastructure is caused by the change to the path is further based on a determination the alarm is associated with a path that has been removed from or added to the first application topology.
9. The computing system of clause 8, wherein to determine whether the alarm is associated with a path that has been added to the first application topology, the processing circuitry is further configured to: compare one or more alarms of the first graph with one or more alarms of the second graph.
10. The computing system of any preceding clause, wherein the one or more paths are representative of traffic flows between nodes of the distributed application and wherein the one or more layers include at least one of:
   a service layer,
   an instance layer,
   a compute layer,
   a leaf layer, or
   a spine layer.
11. The computing system of any preceding clause, wherein to determine the path has changed, the processing circuitry is further configured to:
   determine that at least one node has been removed from or added to the first application topology.
12. The computing system of any preceding clause,
   wherein the first graph comprises a first knowledge graph,
   wherein the second graph comprises a second knowledge graph augmented with alarm information to associate a node of the plurality of nodes with the alarm indicative of the issue in the computing infrastructure,
   wherein the processing circuitry is configured to compare the first knowledge graph and the second knowledge graph to determine the alarm indicative of the issue in the computing infrastructure is caused by the change to the path.
13. A method, comprising
   generating, by a computing system, a first graph representative of a first application topology of a distributed application at a first time, wherein the first application topology includes a first plurality of nodes of a computing infrastructure distributed across a plurality of layers;
   generating, by the computing system, a second graph representative of a second application topology of the distributed application at a second time, wherein the second application topology includes a second plurality of nodes of the computing infrastructure distributed across the plurality of layers;
   determining, by the computing system and based on a comparison of the first graph and the second graph, that a path has changed; and
   based on the determination that the path has changed, outputting, by the computing system, an indication that an alarm indicative of an issue in the computing infrastructure is caused by the change to the path.
14. The method of clause 13, further comprising:
   based on the determination that the path has changed, modifying, by the computing system, a configuration of the distributed application in the computing infrastructure.
15. The method of clause 14, wherein modifying the configuration of the distributed application in the computing infrastructure further comprises:
   modifying the configuration to revert the second application topology of the distributed application to the first application topology of the distributed application.
16. The method of any of clauses 13 to 15, wherein identifying the path has changed further comprises:
   determining that at least one node has been removed from or added to the first application topology.
17. The method of any of clauses 13 to 16, further comprising:
   outputting, by the computing system and for display, a user interface that includes a visual representation of the second graph and the indication that an alarm indicative of an issue in the computing infrastructure is caused by the change to the path.
18. The method of clause 17, further comprising:
   generating the user interface as including a visual indication of the change to the path.
19. The method of clause 17 or 18, further comprising:
   generating the user interface to include a visual representation of the first graph and the second graph.
20. Computer-readable media comprising computer-implementable instructions configured to cause a computer to:
   generate a first graph representative of a first application topology of a distributed application at a first time, wherein the first application topology includes a first plurality of nodes of a computing infrastructure distributed across a plurality of layers;
   generate a second graph representative of a second application topology of the distributed application at a second time, wherein the second application topology includes a second plurality of nodes of the computing infrastructure distributed across the plurality of layers;
   determine, based on a comparison of the first graph and the second graph, that a path has changed; and based on the determination that the path has changed, output an indication that an alarm indicative of an issue in the computing infrastructure is caused by the change to the path.

## Claims

1. A computing system, comprising:
memory; and
processing circuitry in communication with the memory and configured to:
generate a first graph representative of a first application topology of a distributed application at a first time, wherein the first application topology includes a first plurality of nodes of a computing infrastructure distributed across a plurality of layers;
generate a second graph representative of a second application topology of the distributed application at a second time, wherein the second application topology includes a second plurality of nodes of the computing infrastructure distributed across the plurality of layers;
determine, based on a comparison of the first graph and the second graph, that a path has changed; and
based on the determination that the path has changed, output an indication that an alarm indicative of an issue in the computing infrastructure is caused by the change to the path.

2. The computing system of claim 1, wherein the processing circuitry is further configured to:
based on the determination that the path has changed, modify a configuration of the distributed application in the computing infrastructure.

3. The computing system of claim 2, wherein to modify the configuration of the distributed application in the computing infrastructure, the processing circuitry is further configured to:
modify the configuration to revert the second application topology of the distributed application to the first application topology of the distributed application.

4. The computing system of claim 1, 2 or 3, wherein the processing circuitry is further configured to:
output, for display, a user interface that includes a visual representation of the second graph and the indication that an alarm indicative of an issue in the computing infrastructure is caused by the change to the path.

5. The computing system of claim 4, wherein the processing circuitry is further configured to generate the user interface to include a visual indication of the change to the path.

6. The computing system of claim 4 or 5, wherein the processing circuitry is further configured to:
generate the user interface to include a visual representation of the first graph and the second graph.

7. The computing system of any preceding claim, wherein the output of the indication that the alarm indicative of an issue in the computing infrastructure is caused by the change to the path is further based on a determination that the alarm is present at the second time but was not present at the first time.

8. The computing system of any preceding claim, wherein the output of the indication that the alarm indicative of an issue in the computing infrastructure is caused by the change to the path is further based on a determination the alarm is associated with a path that has been removed from or added to the first application topology.

9. The computing system of claim 8, wherein to determine whether the alarm is associated with a path that has been added to the first application topology, the processing circuitry is further configured to:
compare one or more alarms of the first graph with one or more alarms of the second graph.

10. The computing system of any preceding claim, wherein the one or more paths are representative of traffic flows between nodes of the distributed application and wherein the one or more layers include at least one of:
a service layer,
an instance layer,
a compute layer,
a leaf layer, or
a spine layer.

11. The computing system of any preceding claim, wherein to determine the path has changed, the processing circuitry is further configured to:
determine that at least one node has been removed from or added to the first application topology.

12. The computing system of any preceding claim,
wherein the first graph comprises a first knowledge graph,
wherein the second graph comprises a second knowledge graph augmented with alarm information to associate a node of the plurality of nodes with the alarm indicative of the issue in the computing infrastructure,
wherein the processing circuitry is configured to compare the first knowledge graph and the second knowledge graph to determine the alarm indicative of the issue in the computing infrastructure is caused by the change to the path.

13. A method, comprising
generating, by a computing system, a first graph representative of a first application topology of a distributed application at a first time, wherein the first application topology includes a first plurality of nodes of a computing infrastructure distributed across a plurality of layers;
generating, by the computing system, a second graph representative of a second application topology of the distributed application at a second time, wherein the second application topology includes a second plurality of nodes of the computing infrastructure distributed across the plurality of layers;
determining, by the computing system and based on a comparison of the first graph and the second graph, that a path has changed; and
based on the determination that the path has changed, outputting, by the computing system, an indication that an alarm indicative of an issue in the computing infrastructure is caused by the change to the path.

14. The method of claim 13, further comprising:
based on the determination that the path has changed, modifying, by the computing system, a configuration of the distributed application in the computing infrastructure.

15. Computer-readable media comprising computer-implementable instructions configured to cause a computer to:
generate a first graph representative of a first application topology of a distributed application at a first time, wherein the first application topology includes a first plurality of nodes of a computing infrastructure distributed across a plurality of layers;
generate a second graph representative of a second application topology of the distributed application at a second time, wherein the second application topology includes a second plurality of nodes of the computing infrastructure distributed across the plurality of layers;
determine, based on a comparison of the first graph and the second graph, that a path has changed; and
based on the determination that the path has changed, output an indication that an alarm indicative of an issue in the computing infrastructure is caused by the change to the path.
